# EUROPEAN PATENT APPLICATION

(11) **EP 1 912 372 A2**
(43) Date of publication of application: **16.04.2008**
(21) Application number: 07075896.6
(22) Date of filing: 10.10.2007
(51) Int. Cl.: H04L 1/18

(54) **Method for determining data transmission state in data communication system**

(30) Priority: 10.10.2006 JP 2006275999
(71) Applicant: NEC Corporation, Minato-ku Tokyo (JP)
(72) Inventor: Jinsock, Lee, Minato-ku Tokyo (JP); Kojiro, Hamabe, Minato-ku Tokyo (JP)
(74) Representative: Wenzel & Kalkoff

(57) **Abstract**

An upstream communication device notifies a downstream communication device of NEXP(0), which indicates a data reception state at the upstream communication device, and the downstream communication device compares it with NEXP(1), which indicates a data reception state at the downstream communication device. By comparing the reception states (arrival/non-arrival) of each unit of data, it is possible to determine whether or not each unit of data is normally transmitted, and, if data is lost, it is possible to identify a link in which the data is lost.

## Description

### I. Field of the Invention

This application is based upon and claims the benefit of priority from Japanese Patent Application No. 2006-275999, filed on October 10, 2006, the disclosure of which is incorporated herein in its entirety by reference.

The present invention relates to a communications system and, more particularly, to a method for determining the state of data transmission in the system, as well as to a communication device using the method.

### II. Description of the Related Art

In data transmission, it is difficult to completely eliminate the occurrence of data loss, delay, or error in the course of the transmission. Therefore, a retransmission function is provided as a countermeasure in general. For example, in a mobile communications system, a radio link between each mobile station and a base station serving as a network terminal has a considerably high probability of data loss due to its radio properties, in comparison with a core network. Accordingly, an automatic repeat request (ARQ) function is provided to prevent a loss of transmitted data. Hereinafter, data loss and delay, as well as some countermeasures against them, will be described briefly, taking as an example Long Term Evolution (LTE), currently discussed in the Third Generation Partnership Project (3GPP), which is a mobile communications standardization project.

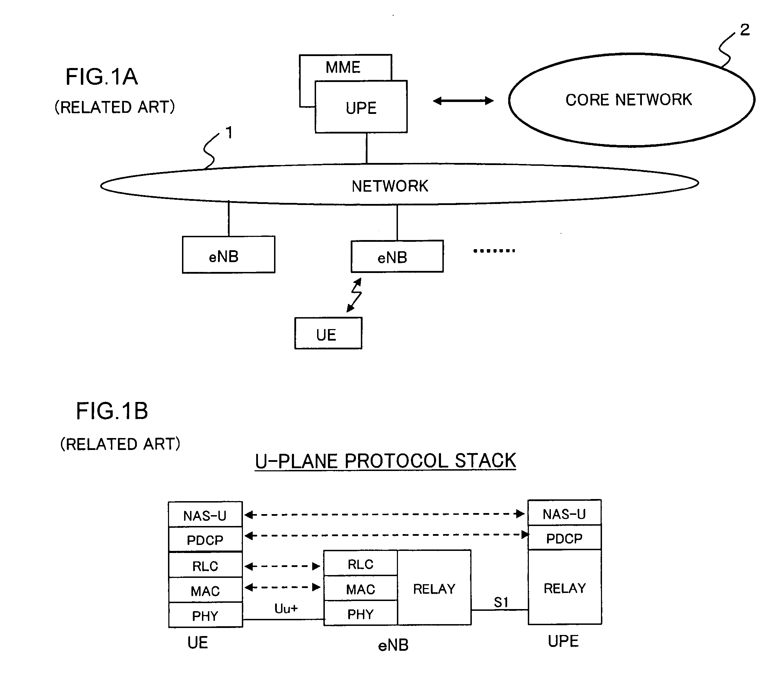

FIG. 1A is a network diagram showing a schematic architecture of a mobile communications system according to LTE. FIG. 1B is a schematic diagram showing a protocol stack of the user plane (U-Plane) in the mobile communications system. Referring to FIG. 1A, a plurality of base stations (each denoted by eNB: enhanced NodeB) are connected to UPE (User Plane Entity) and MME (Mobility Management Entity) through a network 1. The UPE is a device that processes user data, and the MME is a device that carries out mobility management and the like for each user equipment UE. Moreover, each of the UPE and MME are a core-network device connected to a core network 2. In the case of a single device including both of the UPE and MME, the device is sometimes called a gateway (GW). The core network 2 is a TCP/IP network, such as the Internet, for example.

Referring to FIG. 1B, according to LTE protocols, the ARQ function on a radio link control (RLC) layer is provided to a base station eNB. For a packet received in error, the base station eNB performing ARQ processing in conjunction with the RLC layer of the user equipment UE, whereby the base station eNB can receive the retransmitted packet completely.

Incidentally, in FIG. 1B, NAS-U (Non Access Stratum-User plane) is a protocol for PDP context management, and PDCP (Packet Data Convergence Protocol) is a protocol for IP header compression, IP packet encode, and the like. These protocols are provided in each of the UPE and user equipment UE. Moreover, PHY (PHYsical layer protocol) is a protocol regarding radio transmission here between the user equipment UE and base station eNB. MAC (Media Access Control protocol) is a protocol including HARQ (Hybrid ARQ) that provides for high-speed retransmission control, and RLC is a protocol including the above-mentioned ARQ. HARQ carries out retransmission control based on an ACK/NACK feedback from a receiving side. When an error remains even after the HARQ processing, ARQ carries out error correction by retransmitting the data packet that included an error.

Hereinafter, a radio link between a user equipment UE and a base station eNB will be labeled "Uu+", and a link between a base station eNB and the UPE on the network 1 will be labeled "S1". The network 1 can provide links connecting between each base station eNB and the UPE and between base stations eNB. The network 1 is structured, for example, such that pluralities of routers are connected to each other.

### II.1) First example of Related Art

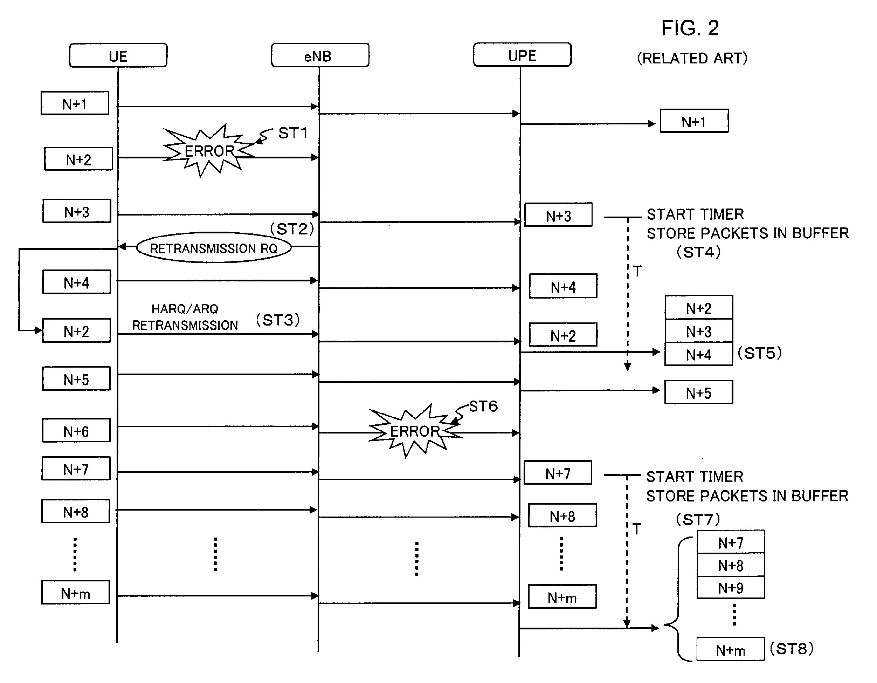

FIG. 2 is a diagram of an uplink packet transmission sequence, to describe an example of the operation at the time of packet loss in the LTE system as shown in FIG. 1B. In FIG. 2, a rectangle represents a packet, and a symbol (such as "N", "N + 1", etc.) inside the rectangle indicates the sequence number of the packet (the same goes for the other drawings). In addition, shown here is the transmission of uplink packets from a user equipment UE to a UPE. An uplink packet, if not lost, is transmitted from the user equipment UE to the UPE via a base station eNB and then sent out from the UPE to the core network 2, like a packet "N + 1". Hereinafter, a description will be given of the case of a packet loss occurring in the radio link Uu+ and the case of a packet loss occurring in the link S 1. Note that the packet loss is assumed to include the case where an error is detected on a receiving side (the same holds true hereinafter).

### a) Packet loss in radio link Uu+

For example, as shown in FIG. 2, it is assumed that a packet "N + 2" is lost in the radio link Uu+ between the user equipment UE and base station eNB (ST1). Here, ARQ of the base station eNB detects a HARQ protocol error in the received packet "N + 2" and, upon this error detection, notifies the user equipment UE of a request to retransmit the packet "N + 2" (ST2). Upon receipt of the request for retransmission, the user equipment UE retransmits the packet "N + 2" to the base station eNB (ST3). Thus, the recovery from the packet loss occurring in the radio link Uu+ is accomplished.

However, such a packet retransmission process disturbs the order in which uplink packets are transmitted from the user equipment UE. If the packets need to be transmitted in order of sequence number, the packets have to be reordered at a downstream node located downstream of the user equipment UE (Reordering). Here, it is assumed to be the UPE that stores received packets in a buffer and then carries out reordering by referring to the sequence numbers of the packets.

For example, it is assumed that after the packet "N + 2" is lost, the user equipment UE transmits a subsequent packet "N + 3", which is received normally by the base station eNB. In this case, the packet "N + 3" is transferred to the UPE through the link S1. Since the UPE receives the packet "N + 3" after the previously received packet "N + 1", the UPE starts a timer to wait for the arrival of the packet "N + 2", which should have been between the packets "N + 1" and "N + 3", and stores in the buffer subsequent packets that arrive during the waiting time (ST4). In FIG. 2, the packets "N + 3" and "N + 4" are stored before the arrival of the packet "N + 2". If the packet "N + 2" has arrived before time T set on the timer elapses, then since packets in order of sequence number have gathered, the UPE sends out the packets "N + 2" to "N + 4" stored in the buffer to the core network 2 (ST5). If the packet "N + 2" does not arrive even after a lapse of the time T set on the timer, the UPE sends out the stored packets "N + 3" and "N + 4" to the core network 2.

### b) Packet loss in link S1

The link S 1 between each base station eNB and the UPE is a so-called last-mile link for connecting the core network 2 to each of the plurality of base stations eNB. The link S 1 has higher reliability than the radio link Uu+ but has a high probability of data loss in comparison with the core network 2.

For example, as shown in FIG. 2, it is assumed that a packet "N + 6" is lost in the link S 1 between the base station eNB and UPE (ST6). In this case, if the user equipment UE transmits a subsequent packet "N + 7", which is normally received by the base station eNB, then the packet "N + 7" is transferred to the UPE through the link S 1. Since the UPE receives the packet "N + 7" after the previously received packet "N + 5", the UPE starts the timer to wait for the arrival of the packet "N + 6", which should have been between the packets "N + 5" and "N + 7", and stores in the buffer subsequent packets that arrive during the waiting time (ST7).

Here, since the packet "N + 6" is lost in the link S1, the UPE will not receive the packet "N + 6" again. When the timer expires, the UPE sends out the packets "N + 7" to "N + m" stored in the buffer to the core network 2 (ST8).

### II.2) Second example of Related Art)

It is possible to make a configuration that allows the base station eNB to retransmit a packet lost in the link S 1. As one of the methods, it has been proposed that an ARQ function dedicated to the link S1 be provided (see R. Stewart, et al., "Stream Control Transmission Protocol," Request for Comments: 2960, Section 6.7).

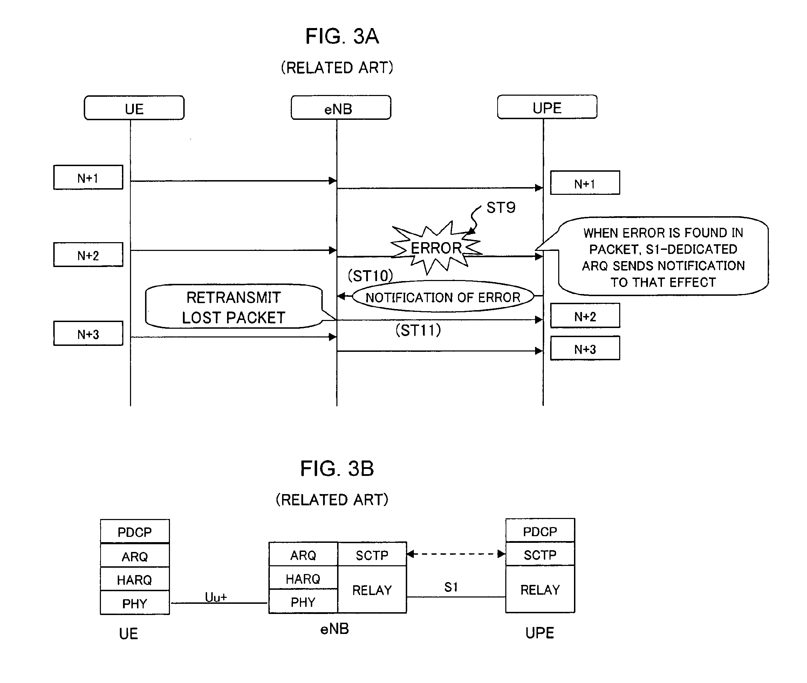

FIG. 3A is a sequence diagram showing an ARQ process dedicated to the link S1, and FIG. 3B is a schematic diagram showing a user-plane protocol stack for the ARQ process. In R. Stewart, et al., "Stream Control Transmission Protocol," Request for Comments: 2960, SCTP (Stream Control Transmission Protocol) is described as an ARQ protocol dedicated to the link S1. Referring to FIG. 3A, when the UPE detects an error in the packet "N + 2" received from the base station eNB (ST9), the UPE sends a notification to that effect to the base station eNB (ST10). In response to this notification, the base station eNB retransmits the packet "N + 2" to the UPE (ST11).

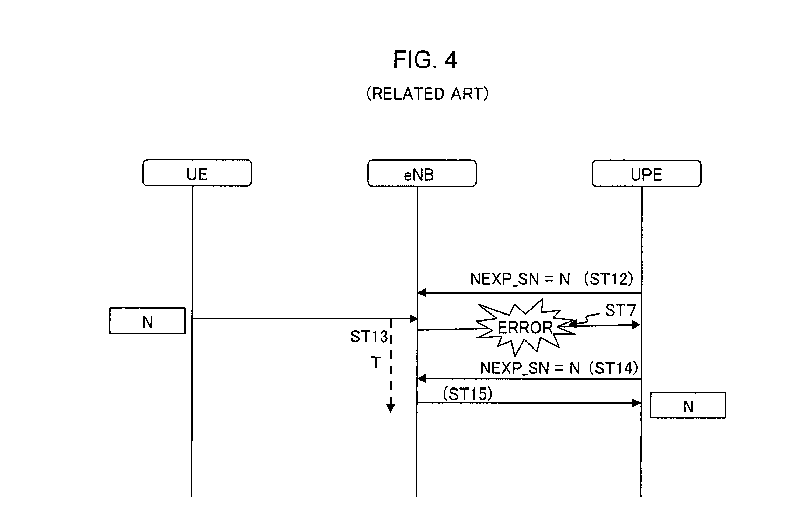

A conceivable other method is that the UPE notifies the base station eNB of the sequence number of each packet to be received next before the UPE receives that packet, and that the base station eNB transmits the packet in response to the notification. According to this method, if the UPE does not receive the packet, the UPE again notifies the base station eNB of the sequence number of the packet in question, whereby, consequently, the retransmission of the packet can be accomplished. Such a method is shown in FIG. 4.

As shown in FIG. 4, for example, when the UPE notifies the base station eNB of "NEXP_SN = N" that is the sequence number of a packet to be received next from the base station eNB (ST12), then the base station eNB transmits the packet "N" received from the user equipment UE to the UPE and also keeps the packet "N" in a buffer only for a certain period T (ST13). Unless the UPE receives this packet "N" completely, the UPE again notifies the base station eNB of "NEXP_SN = N", the sequence number of the packet in question (ST14). In response to this notification, the base station eNB can retransmit the packet "N" kept in the buffer to the UPE (ST15).

However, the above-described techniques according to the related art have the following problems.
(1) According to the above-described first example of the related art, the UPE, which is a node on the receiving side, cannot locate where a packet loss has occurred. Therefore, when the UPE detects that a packet to be received is missing, the UPE invariably starts the timer to fall in a wait state. Since the packet is not retransmitted if the packet loss has occurred in the link S1, the UPE's waiting for the packet is obviously unnecessary, which, however, cannot be determined by the UPE according to the first example of the related art.
   In addition, with respect to the waiting time T, the maximum delay time of a link on the side where the base station eNB receives data (here, the radio link Uu+ upstream of eNB) is generally used to be set on the timer. Therefore, those packets received before the expiration of the timer are all stored in the buffer and then collectively sent out after the timer has expired, as shown in FIG. 2. For example, in the case where the HARQ process with a maximum delay of 18 msec is carried out using a 100-Mbps user equipment UE in the LTE system, it is calculated that a maximum of 150 packets are stored in the buffer of the UPE. The higher the radio data rate is, the larger the amount of packets is stored. Moreover, as the number of retransmissions carried out by HARQ is increased to enhance the reliability of the radio link Uu+, the amount of packets stored and the delay time are both increased.
   As described above, in the case where an upstream link is present in which a long delay might occur, a node located downstream of the link (a node located at a point to which data flows from the link) needs to set a waiting time T long enough to cover the maximum delay. Such a delay in packet transmission triggers the start of congestion control in the TCP protocol in the core network 2. For example, through this congestion control, a request for transmission is frequently sent from a file server on the receiving side to the user equipment UE, which causes an increase in the loads on the network and also a decrease in the user throughput.
(2) According to the above-described second example of the related art, packet retransmission is carried out when a packet loss occurs in the link S1. However, there are some cases to which it is more desirable to reduce the delay than to recover a small amount of missing data, such as the case of streaming data and the case of data transmitted in real time. For such data, it is relatively disadvantageous to carry out packet retransmission, which increases the delay.
   Moreover, to carry out packet retransmission, the base station eNB needs to keep each packet for at least a period of time during which a request for retransmission can be made, and also needs to be provided with a buffer for keeping the packets.
   Additionally, providing a dedicated ARQ function, such as SCTP, is not a desirable solution because the provision of the dedicate ARQ function may complicate the protocols.
(3) In any of the above-described first and second examples of the related art, no consideration is given to delay variation that may occur in the link S 1. In the case where the network 1 is structured by a plurality of routers being connected to each other as mentioned above, there are some occasions when an earlier-transmitted packet arrives at the UPE later than a subsequent packet, depending on the routes, even if these packets are of a sequence of packets transmitted from the same user equipment UE. Even in such a case, it is desirable to control so that no unnecessarily long delay occurs.

Accordingly, an object of the present invention is to provide a method and system for data transmission state determination by which a downstream node can determine the data transmission state.

According to the present invention, in a system including a plurality of nodes through which data is transmitted, wherein any two nodes of the plurality of nodes are an upstream node and a downstream node with respect to a data transmission direction, the upstream node notifies the downstream node of a data reception state of the upstream node, and the downstream node determines the data transmission state by comparing the data reception state of the upstream node and a data reception state of the downstream node.

As described above, a data reception state at an upstream node is notified to a downstream node and is compared with a data reception state at the downstream node, whereby the data transmission state is determined. Thus, the downstream node can grasp the states of transmission of data that is transmitted through a plurality of nodes, and thus can identify a link in which an error or a delay has occurred.
- FIG. 1A: is a network diagram showing a schematic architecture of a mobile communications system according to LTE.
- FIG. 1B: is a schematic diagram showing a protocol stack of the user plane (U-Plane) in the system.
- FIG. 2: is a diagram of an uplink packet transmission sequence, to describe an example of the operation at the time of packet loss in the LTE system shown in FIG. 1B.
- FIG. 3A: is a sequence diagram showing an ARQ process dedicated to a link S1.
- FIG. 3B: is a schematic diagram showing a user-plane protocol stack for the ARQ process.
- FIG. 4: is a sequence diagram showing another example of a method for packet retransmission.
- FIG. 5: is a schematic diagram of a communications system, to describe a method for data transmission state determination according to a first exemplary embodiment of the present invention.
- FIG. 6: is a block diagram schematically showing a circuit for data transmission state determination in a communication device according to the first exemplary embodiment of the present invention.
- FIG. 7: is a flowchart showing data transmission state determination control by a communication device according to the first exemplary embodiment of the present invention.
- FIG. 8A: is a sequence diagram showing an example of data transmission state determination at the time of normal communication.
- FIG. 8B: is a sequence diagram showing an example of data transmission state determination according to the first exemplary embodiment of the present invention in the case where an error occurs in the link I(1).
- FIG. 8C: is a sequence diagram showing an example of data transmission state determination according to the first exemplary embodiment of the present invention in the case where an error occurs in the link I(0).
- FIG. 8D: is a format diagram showing an example of a transmission packet transmitted over the link I(1).
- FIG. 9: is a schematic diagram of a communications system, to describe a method for data transmission according to a second exemplary embodiment of the present invention.
- FIG. 10: is a block diagram schematically showing a circuit for transmission wait control in a communication device according to the second exemplary embodiment of the present invention.
- FIG. 11: is a flowchart showing transmission wait control by a communication device according to the second exemplary embodiment of the present invention.
- FIG. 12A: is a sequence diagram showing an example of packet transmission according to a second example of the present invention in the case where delay variation occurs in a link I(1).
- FIG. 12B: is a sequence diagram showing an example of packet transmission according to the first example of the present invention in the case where an error occurs in the link I(1).
- FIG. 13A: is a sequence diagram showing an example of packet transmission according to the second example of the present invention in the case where a recoverable error or delay occurs in the link I(0).
- FIG. 13B: is a sequence diagram showing an example of packet transmission according to the second example of the present invention in the case where an unrecoverable error occurs in the link I(0).
- FIG. 14A: is a block diagram showing a schematic configuration of a base station eNB (enhanced Node B) in a mobile communications system according to a third example of the present invention.
- FIG. 14B: is a block diagram showing a schematic configuration of a UPE (User Plane Entity) in the mobile communications system according to the third example of the present invention.
- FIG. 15: is a flowchart showing transmission wait control by the UPE according to a third example of the present invention.
- FIG. 16A: is a sequence diagram showing an example of the operation of the UPE in the case where an error occurs in a link S 1 in the mobile communications system according to the third example of the present invention.
- FIG. 16B: is a sequence diagram showing an example of the operation of the UPE in the case where an unrecoverable error occurs in a link Uu+ in the mobile communications system according to the third example of the present invention.
- FIG. 17: is a sequence diagram showing an example of the operation of the UPE in the case where a recoverable error or delay occurs in the link Uu+ in the mobile communications system according to the third example of the present invention.
- FIG. 18: is a schematic diagram of a communications system, to describe a method for data transmission according to a third exemplary embodiment of the present invention.
- FIG. 19A: is a block diagram showing a schematic configuration of a base station eNB (enhanced Node B) in a mobile communications system according to a fourth example of the present invention.
- FIG. 19B: is a block diagram showing a schematic configuration of a UPE (User Plane Entity) in the mobile communications system according to the fourth example of the present invention.
- FIG. 20: is a sequence diagram showing an example of the operation of the UPE in the case where an error occurs in a link S 1 in the mobile communications system according to the fourth example of the present invention.
- FIG. 21: is a sequence diagram showing an example of the operation of the UPE in the case where an unrecoverable error occurs in a radio link Uu+ in the mobile communications system according to the fourth example of the present invention.
- FIG. 22: is a sequence diagram showing an example of the operation of the UPE in the case where a recoverable error or delay occurs in the radio link Uu+ in the mobile communications system according to the fourth example of the present invention.
- FIG. 23: is a schematic diagram of a mobile communications system, to describe a method for data transmission at the time of handover according to a fourth exemplary embodiment of the present invention.

### 1. First exemplary embodiment

### 1.1) System configuration

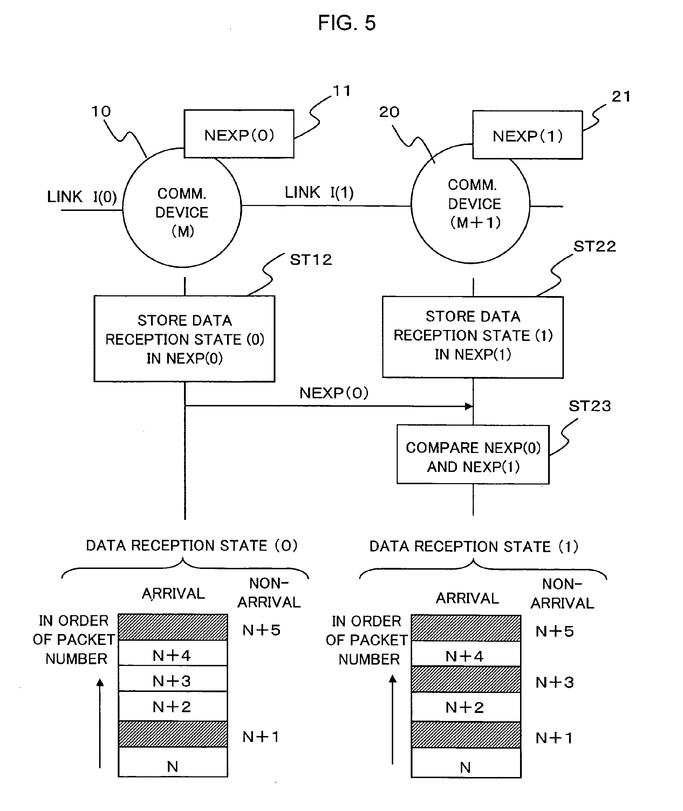

FIG. 5 is a schematic diagram of a communications system, to describe a method for data transmission state determination according to a first exemplary embodiment of the present invention. Here, to simplify the description, it is assumed that "M" represents a node (a communication device 10) located upstream in the direction of packet transmission, that "M + 1" represents a node (a communication device 20) located downstream in the direction of packet transmission, that the communication devices 10 and 20 are connected through a link I(1), and that the upstream side of the communication device 10 is connected to a link I(0). A sequence of packets are individually given sequence numbers (hereinafter, referred to as packet numbers), which indicate respective turns in the sequence, and are sequentially transmitted in the direction from the communication device 10 toward the communication device 20. The communication device 10 is provided with a memory 11, which stores NEXP(0), a piece of information indicative of a data reception state (0) at the communication device 10. Similarly, the communication device 20 is provided with a memory 21, which stores NEXP(1), a piece of information indicative of a data reception state (1) at the communication device 20.

When the communication device 10 has received a packet through the link I(0), the communication device 10 stores the packet normally received (arrival packet) in a buffer and also updates the date reception state (0). The arrival packets and non-arrival packets are managed in order of packet number. Non-arrival packets may include a packet in which an error is detected, a packet incompletely received, or a packet that should be arriving next.

In FIG. 5, as an example, the data reception state (0) indicates that the packets "N" and "N + 2" to "N + 4" are arrival packets, which have been normally received, and that the packets "N + 1" and "N + 5" are non-arrival packets. Since it is sufficient that the data reception state (0) can specify such reception states of packets, it is also possible that the data reception state (0) includes only either the packet numbers of the arrival packets or the packet numbers of the non-arrival packets. Further, it is also possible that the data reception state (0) includes only the smallest one of the packet numbers of the non-arrival packets, only the packet number of a packet that should be arriving next, or the like, whereby the amount of data of the data reception state (0) can be reduced.

Such data reception state (0) is stored in NEXP(0) in a predetermined format and then transmitted from the communication device 10 to the downstream communication device 20 (ST12). Since the transmission of NEXP(0) is only to notify the data reception state at the self device (the communication device 10) to the downstream communication device 20, NEXP(0) may also be transmitted as part of data in a packet that is transferred downstream, or may also be periodically transmitted in a different packet from a data packet.

Similarly, when the communication device 20 has received a packet from the communication device 10 through the link I(1), the communication device 20 stores the packet normally received (arrival packet) in a buffer and also updates the date reception state (1). The arrival packets and non-arrival packets are managed in order of packet number. Non-arrival packets include a packet in which an error is detected, a packet incompletely received, and a packet that should be arriving next.

In FIG. 5, as an example, the data reception state (1) indicates that the packets "N", "N + 2", and "N + 4" are arrival packets, which have been normally received, and that the packets "N + 1", "N + 3", and "N + 5" are non-arrival packets. Since it is sufficient that the data reception state (1) can specify such reception states of packets, it is also possible that the data reception state (1) includes only either the packet numbers of the arrival packets or the packet numbers of the non-arrival packets.

Such data reception state (1) is stored in NEXP(1) in the same format as NEXP(0) (ST22), and is compared with NEXP(0) received from the communication device 10, which indicates the data reception state (0) (ST23). The data transmission state can be determined for each packet from the result of comparison, which will be described hereinafter.

### 1.2) Data transmission state determination

Data transmission state determination is generally carried out based on criteria as shown in Table I below. Specifically, when a packet has arrived at both of the upstream and downstream nodes, it is determined that the transmission is normal. When a packet has arrived at neither of the upstream and downstream nodes, it is determined that an error or a delay has occurred in the link I(0) upstream of the upstream node. When a packet has arrived at the upstream node but has not arrived at the downstream node, it is determined that an error or a delay has occurred between the upstream and downstream nodes.

Incidentally, it is impossible in principle that a packet that has not arrived at the upstream node arrives at the downstream node. However, if such a reception state occurred, it can also be determined that a failure has occurred in each of the nodes themselves, or that an error has occurred in each of the links I(0) and I(1).

**Table I**

| EACH PACKET | ARRIVAL AT UPSTREAM NODE | NON-ARRIVAL AT UPSTREAM NODE |
|---|---|---|
| ARRIVAL AT DOWNSTREAM NODE | NORMAL TRANSMISSION | - |
| NON-ARRIVAL AT DOWNSTREAM NODE | ERROR/DELAY IN LINK I(1) | ERROR/DELAY IN LINK I(0) |

In the case of the data reception states shown in FIG. 5, the data transmission state can be determined for each packet as follows:
- With respect to the packet "N", it is determined that the transmission is normal because the packet "N" has arrived at the communication device 10 and also at the communication device 20. The same holds true with the packets "N + 2" and "N + 4".
- With respect to the packet "N + 1", it is determined that an error or a delay has occurred in the link I(0) upstream of the communication device 10, or somewhere before the link I(0), because the packet "N + 1" has not arrived at the communication device 10 nor at the communication device 20.
- With respect to the packet "N + 3", it is determined that an error or a delay has occurred in the link I(1) between the communication devices 10 and 20 because the packet "N + 3" has arrived at the communication device 10 but not at the communication device 20.
- With respect to the packet "N + 5", the packet has not arrived at the communication device 10 nor at the communication device 20. However, if this packet is the latest one, it is determined that the packet "N + 5" is a packet that should be arriving next.

### 1.3) Determination control

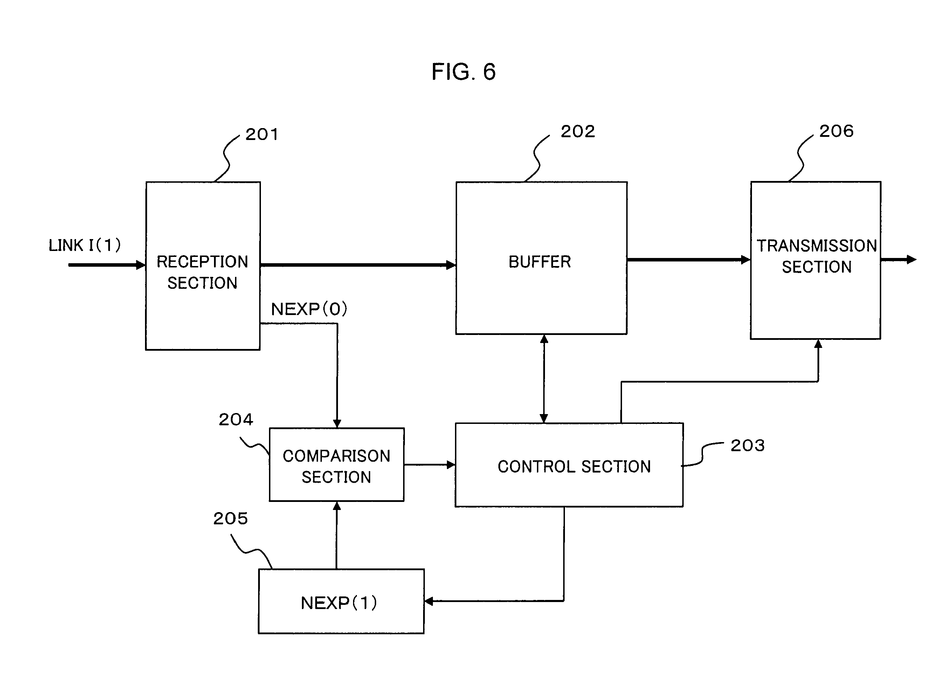

FIG. 6 is a block diagram schematically showing a data transmission state determination circuit in a communication device according to the first exemplary embodiment of the present invention. This circuit for data transmission state determination control is provided to the communication device 20 located downstream.

The communication device 20 includes a reception section 201 connected to the link I(1). The reception section 201 stores in a buffer 202 a packet (an arrival packet) normally received from the upstream communication device 10 through the link I(1) and also outputs to a comparison section 204 NEXP(0) indicative of the data reception state (0) received from the communication device 10.

A control section 203 manages the packets in the buffer 202 based on the packet numbers of arrival packets (arrival packet numbers) and identifies the packet number of each non-arrival packet (non-arrival packet number), which includes a packet in which an error is detected. Subsequently, the control section 203 generates a data reception state (1) based on the arrival packet numbers and/or non-arrival packet numbers and updates NEXP(1), which is stored in a memory 205. Further, the control section 203 controls a transmission section 206, so that the transmission section 206 transmits the arrival packets stored in the buffer 202 out to a downstream link.

The comparison section 204 compares NEXP(0) received from the communication device 10 with NEXP(1) of its own device (the communication device 20) and outputs the result of comparison to the control section 203. The control section 203 determines the data transmission state for each packet, based on the result of comparison received from the comparison section 204 and the non-arrival packet numbers. An example of data transmission state determination control by the control section 203 will be described next.

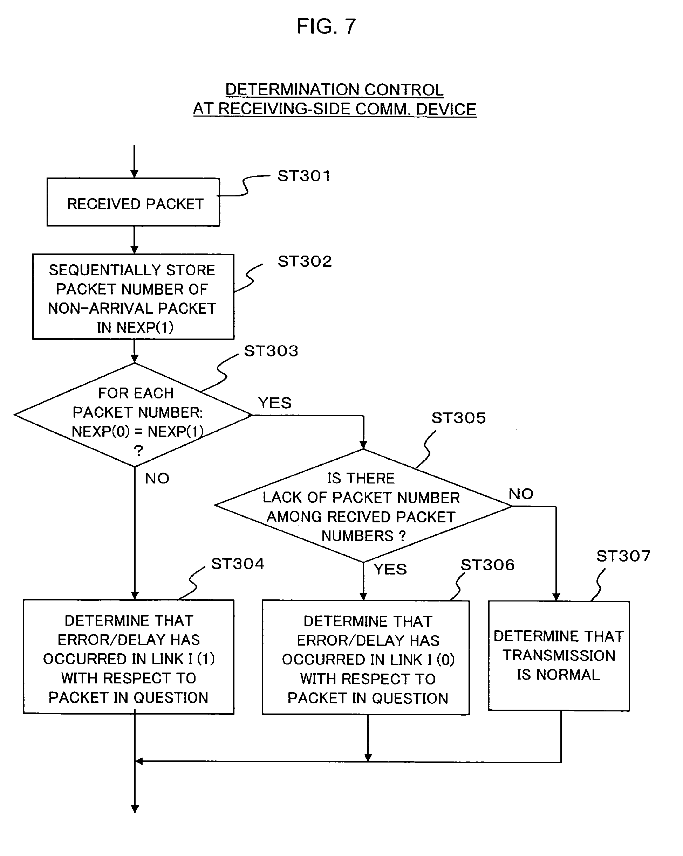

FIG. 7 is a flowchart showing the data transmission state determination control performed at a communication device (here, the communication device 20) according to the first exemplary embodiment of the present invention. First, when the reception section 201 has received packets (ST301), the control section 203 identifies a non-arrival packet number based on arrival packet numbers and then sequentially stores these packet numbers in NEXP(1) in the memory 205 (ST302).

Subsequently, the comparison section 204, under the control of the control section 203, compares NEXP(0) received from the communication device 10 with NEXP(1) of its own device (the communication device 20), and the control section 203 determines, for each packet number, whether or not the data reception states (i.e., arrival or non-arrival) match (ST303).

With respect to the arrival/non-arrival of a certain packet number, when NEXP(0) and NEXP(1) do not match (ST303: NO), then, as shown in Table I, it is determined that an error or a delay has occurred in the link I(1) with respected to the packet in question (ST304). However, even when NEXP(0) ≠ NEXP(1), it can be further determined whether or not NEXP(0) indicates arrival and NEXP(1) indicates non-arrival. Then, if so, it can be determined that an error or a delay has occurred in the link I(1) with respect to the packet in question. If NEXP(0) indicates non-arrival and NEXP(1) indicates arrival, protocol error processing may be carried out.

When NEXP(0) and NEXP(1) match with respect to the arrival/non-arrival of the certain packet number (ST303: YES), then, as shown in Table I, it is necessary to determine whether the transmission is normal, or an error or a delay has occurred in the link I(0). Therefore, the control section 203 determines whether or not the arrival packet numbers are consecutive, in other words, whether or not any missing packet number is among the arrival packet numbers (ST305).

If there is a missing packet number (ST305: YES), then since the communication device 20 is in a state of waiting for the arrival of this missing packet, the control section 203 determines that an error or a delay has occurred in the link I(0) with respect to this packet (ST306). If there is no missing packet number, that is, if the arrival packet numbers are consecutive (ST305: NO), then it is determined that the non-arrival packet is a packet that should be arriving next, and hence it is determined that the transmission is normal so far (ST307).

Note that the control section 203 and comparison section 204 can also be implemented by executing a program for carrying out the above-described data transmission state determination control on a program-controlled processor such as a CPU or a computer.

### 1.4) First example

A more specific example of the present embodiment will be described next. In this first example, it is assumed that the smallest one of non-arrival packet numbers is stored in each of NEXP(0) and NEXP(1), which indicate data reception states at the communication devices 10 and 20, respectively. Since a single packet number is stored, the amount of data in NEXP(0) is reduced, which is notified from the communication device 10 to the communication device 20, resulting in that it does not occupy much of the transmission capacity of the link I(1). Additionally, the loads on the communication devices 10 and 20 are also reduced.

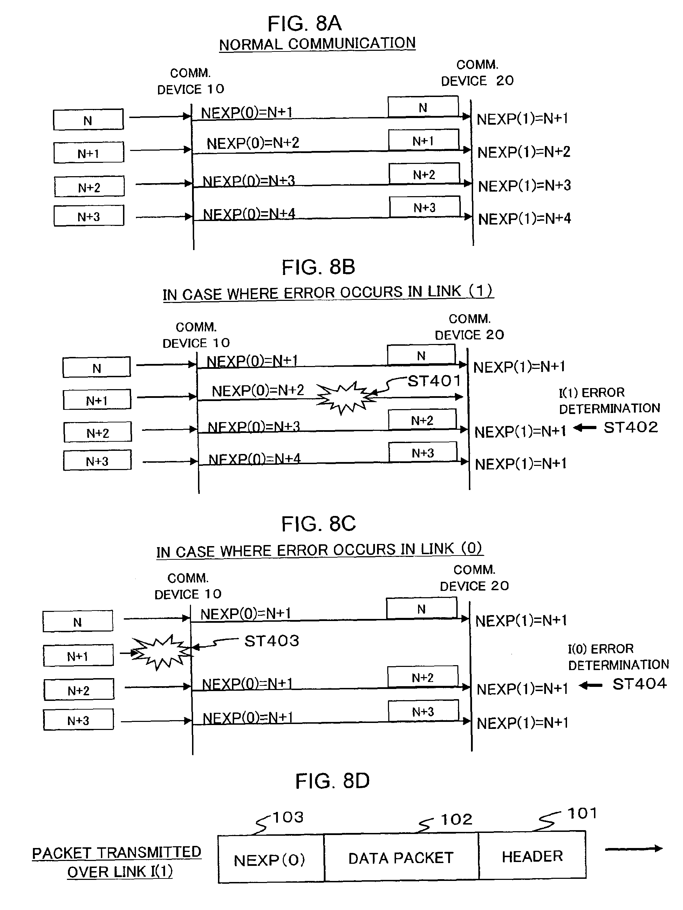

FIG. 8A is a sequence diagram showing an example of the data transmission state determination at the time of normal communication. FIG. 8B is a sequence diagram showing an example of the data transmission state determination according to the first exemplary embodiment of the present invention in the case where an error occurs in the link I(1). FIG. 8C is a sequence diagram showing an example of the data transmission state determination according to the first exemplary embodiment of the present invention in the case where an error occurs in the link I(0).

Referring to FIG. 8A, at the time of normal communication, the communication device 10, when a packet "N" has arrived, stores in NEXP(0) the packet number of a packet that should be arriving next, "N + 1", and then transmits this NEXP(0) along with the packet "N" to the downstream communication device 20. Upon the arrival of the packet "N", the communication device 20 stores in NEXP(1) the packet number of a packet that should be arriving next, "N + 1". That is, NEXP(0) = NEXP(1) = N + 1, which means that NEXP(0) and NEXP(1) match. For other packets, the operations are similarly performed. When a packet is normally transmitted, a match occurs between NEXP(0) of the upstream node and NEXP(1) of the downstream node.

In addition, when normal transmission is performed, packets arrive at the communication device 20 in order of consecutive packet numbers. When an error has occurred, there is a missing packet number among the arrival packet numbers. Therefore, the downstream communication device 20 can determine whether or not the data transmission state is normal, by checking a match between NEXP(0) and NEXP(1) and also checking the consecutiveness of the arrival packet numbers (ST303 and ST305 in FIG.7).

Referring to FIG. 8B, when an error has occurred in the link I(1) with respect to, for example, a packet "N + 1", the occurrence of the error can be detected from the fact that NEXP(0) and NEXP(1) do not match. Specifically, first, when a packet "N" has arrived, the communication device 10 stores in NEXP(0) the packet number of a packet that should be arriving next, "N + 1", and then transmits this NEXP(0) along with the packet "N" to the downstream communication device 20. Upon the arrival of the packet "N", the communication device 20 stores in NEXP(1) the packet number of a packet that should be arriving next, "N + 1". That is, with respect to the packet "N", NEXP(0) = NEXP(1) = N + 1, which means that NEXP(0) and NEXP(1) match.

Next, when a packet "N + 1" has arrived, the communication device 10 stores in NEXP(0) the packet number of a packet that should be arriving next, "N + 2", with the result that NEXP(0) = N + 2, and then transmits this NEXP(0) along with the packet "N + 1" to the downstream communication device 20. It is assumed that an error has occurred during this transmission of the packet "N + 1" (ST401), resulting in the packet "N + 1" not arriving at the communication device 20. In this case, since the packet "N + 1" has not arrived, no change occurs in the data reception state, and accordingly the communication device 20 maintains NEXP(1) = N + 1.

Next, when a packet "N + 2" has arrived, the communication device 10 stores in NEXP(0) the packet number of a packet that should be arriving next, "N + 3", with the result that NEXP(0) = N + 3, and then transmits this NEXP(0) along with the packet "N + 2" to the downstream communication device 20. Upon the arrival of the packet "N + 2", the communication device 20 determines that "N + 3" is the packet number of a non-arrival packet that should be arriving next. However, since "N + 1" is still the smallest one of the non-arrival packet numbers, the communication device 20 maintains NEXP(1) = N + 1. Accordingly, NEXP(0) = N + 3 and NEXP(1) = N + 1, which means that NEXP(0) and NEXP(1) do not match. Therefore, the communication device 20 can determine that an error has occurred in the link I(1) with respect to the packet "N + 1" (ST402).

Referring to FIG. 8C, when an error has occurred in the link I(0) with respect to, for example, a packet (N + 1), the occurrence of the error can be detected from the fact that NEXP(0) and NEXP(1) match and the fact that there is a missing packet number among arrival packet numbers. Specifically, first, when a packet "N" has arrived, the communication device 10 stores in NEXP(0) the packet number of a packet that should be arriving next, "N + 1", and then transmits this NEXP(0) along with the packet "N" to the downstream communication device 20. Upon the arrival of the packet "N", the communication device 20 stores in NEXP(1) the packet number of a packet that should be arriving next, "N + 1". That is, NEXP(0) = NEXP(1) = N + 1, which means that NEXP(0) and NEXP(1) match, with respect to the packet "N".

Next, when an error has occurred in the link I(0) with respect to a packet "N + 1" (ST403), the packet "N + 1" does not arrive at the communication device 10, with no change occurring in the data reception state, and accordingly the communication device 10 maintains NEXP(0) = N + 1. Similarly, the communication device 20 also maintains NEXP(1) = N + 1.

Subsequently, when a packet "N + 2" has arrived, the communication device 10 maintains NEXP(0) = N + 1 because although "N + 3" is the packet number of a packet that should be arriving next, the smallest one of the non-arrival packet numbers is still "N + 1". The communication device 10 then transmits this NEXP(0) (= N + 1) along with the packet "N + 2" to the downstream communication device 20. The communication device 20 similarly maintains NEXP(1) = N + 1 because the smallest one of the non-arrival packet numbers is still "N + 1".

Accordingly, NEXP(0) = NEXP(1) = N + 1, which means that NEXP(0) and NEXP(1) match. However, in this case, the packet "N + 1" is missing, and the arrival packet numbers are not consecutive. Hence, by checking a match between NEXP(0) and NEXP(1) and also checking the non-consecutiveness of the arrival packet numbers (ST303 and ST305 in FIG. 7), the downstream communication device 20 can determine that an error has occurred in the link I(0) with respect to the packet "N + 1".

FIG. 8D is a format diagram showing an example of a transmission packet transmitted over the link I(1). As mentioned earlier, since the transmission of NEXP(0) is to notify the downstream communication device 20 of the data reception state at the communication device 10, NEXP(0) can be transmitted as part of data in a packet transmitted over the link I(1).

Referring to FIG. 8D, a transmission packet transmitted over the link I(1) has a header 101 for accomplishing the transmission over the link I(1) and a following data field. The data field includes a field 102 for storing a packet the communication device 10 has received from upstream, and a field 103 for storing NEXP(0), which indicates the data reception state at the communication device 10. For example, taking the packet "N" in FIG. 8C as an example, the communication device 10 places the arrival packet "N" in the field 102, places the then NEXP(0) (= N + 1) in the field 103, and then transmits the transmission packet to the communication device 20.

The field 103, which stores NEXP(0), can be provided at a predetermined location in the data field of the transmission packet. The communication device 20 that has received the transmission packet can read out NEXP(0) at the predetermined location in the data field of the received transmission packet. Note that the present example is not limited to this scheme, but NEXP(0) can be transmitted to the communication device 20 in a separate packet.

### 1.5) Advantages

According to the first exemplary embodiment of the present invention, the data reception state (arrival/non-arrival of each packet) at an upstream node is notified to a downstream node, and the downstream node compares it with the data reception state (arrival/non-arrival of each packet) at the self node, whereby the downstream node can determine the transmission state of each packet.

### 2. Second exemplary embodiment

In a method for data transmission according to a second exemplary embodiment of the present invention, the length of time for which a downstream node waits for a packet is controlled depending on the transmission state of each packet determined by using the above-described method for data transmission state determination according to the first exemplary embodiment. Thereby, it is possible to reduce an unnecessary time to wait for a packet, and accordingly it is possible to reduce the delay as a whole in packet transmission. Hereinafter, the second exemplary embodiment will be described in detail.

### 2.1) System configuration

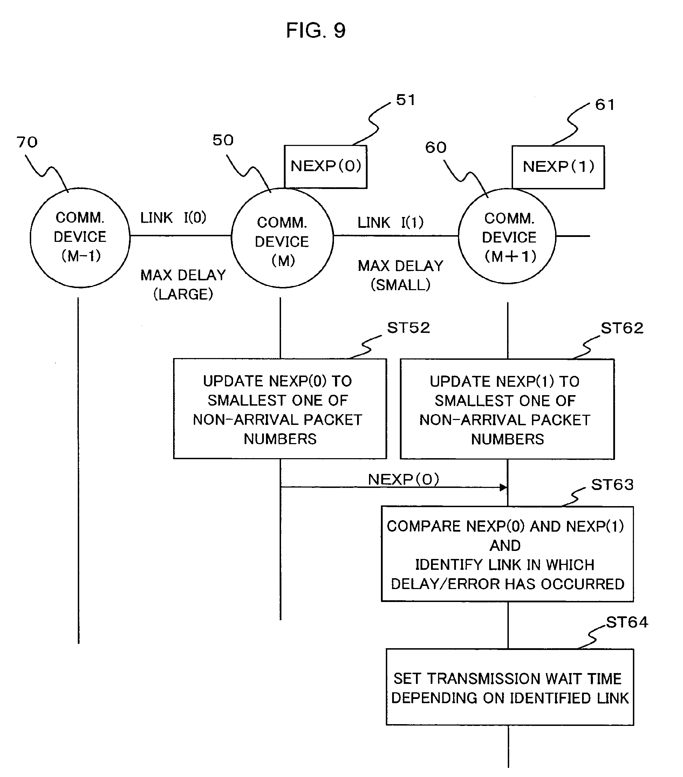

FIG. 9 is a schematic diagram of a communications system, to describe the method for data transmission according to the second exemplary embodiment of the present invention. Here, as in FIG. 5, "M" represents a node (a communication device 50) located upstream in the direction of packet transmission, "M + 1" is a node (a communication device 60) located downstream in the direction of packet transmission, and "M - 1" is a node (a communication device 70) located further upstream of the communication device 50. Moreover, it is assumed that the communication devices 50 and 60 are connected through a link I(1), and that the communication devices 70 and 50 are connected through a link I(0).

Further, it is assumed that the links I(0) and I(1) have different maximum amounts of delay, and it is assumed here that the maximum amount of delay of the link I(0) is larger than that of the link I(1). For example, as described with reference to FIG. 2, in the link I(0), there are some occasions when the arrival of a packet to the communication device 50 is long delayed because of a retransmission process such as HARQ/ARQ, and therefore the maximum amount of delay is relatively large. On the other hand, in the link I(1), since a retransmission function is not provided, the delay is on the scale of delay variation due to different packet routes at most, and therefore the maximum amount of delay is relatively small.

A sequence of packets are individually given sequence numbers (hereinafter, referred to as packet numbers), which indicate respective turns in the sequence, and are sequentially transmitted in the direction from the communication device 70 toward the communication device 60. The communication device 50 is provided with a memory 51, which stores NEXP(0), a piece of information indicative of a data reception state (0) at the communication device 50. Similarly, the communication device 60 is provided with a memory 61, which stores NEXP(1), a piece of information indicative of a data reception state (1) at the communication device 60. Further, the communication device 60 is provided in advance with transmission wait times equivalent to the maximum amounts of delay of the links I(0) and I(1), respectively.

The data reception states (0) and (1) are similar to those described in FIG. 5. In the present embodiment, however, it is assumed the smallest one of non-arrival packet numbers is stored in each of NEXP(0) and NEXP(1), which indicate the data reception states at the communication devices 50 and 60, respectively. Since a single packet number is stored, the reduced amount of data in NEXP(0), which is notified from the communication device 50 to the communication device 60, does not occupy much of the transmission capacity of the link I(1). Additionally, the loads on the communication devices 50 and 60 are also reduced.

The communication device 70 transmits a packet to the communication device 50 through the link I(0). When the communication device 50 has received the packet, the communication device 50 stores the packet normally received (arrival packet) in a buffer, also stores the smallest one of non-arrival packet numbers in NEXP(0) in a predetermined format, and then transmits this NEXP(0) along with the arrival packet to the downstream communication device 60 (ST52). Incidentally, the arrival packets and non-arrival packets are managed in order of packet number. Non-arrival packets may include a packet in which an error is detected, a packet incompletely received, or a packet that should be arriving next.

Similarly, when the communication device 60 has received a packet from the communication device 50 through the link I(1), the communication device 60 stores the packet normally received (arrival packet) in a buffer and also stores the smallest one of non-arrival packet numbers in NEXP(1) in the predetermined format (ST62). If in a normal packet transmission state, the communication device 60 then transmits the arrival packet downstream straightaway, without waiting to transmit.

The communication device 60 compares NEXP(0) received from the communication device 50 with NEXP(1) of its own and, by using the above-described determination method according to the first exemplary embodiment, identifies a link in which a delay or an error has occurred (ST63). Specifically, in the case where a packet has arrived at both of the communication devices 50 and 60, it is determined that the transmission is normal. However, in the case where a packet has not arrived at the communication device 50 nor at the communication device 60, it is determined that an error or a delay has occurred in the link I(0). In the case where a packet has arrived at the communication device 50 but not at the communication device 60, it is determined that an error or a delay has occurred in the link I(1). In this manner, the link can be identified.

The communication device 60 can set a transmission wait time depending on the maximum amount of delay of the link in which it is determined that an error or a delay has occurred (ST64).

### 2.2) Transmission wait control

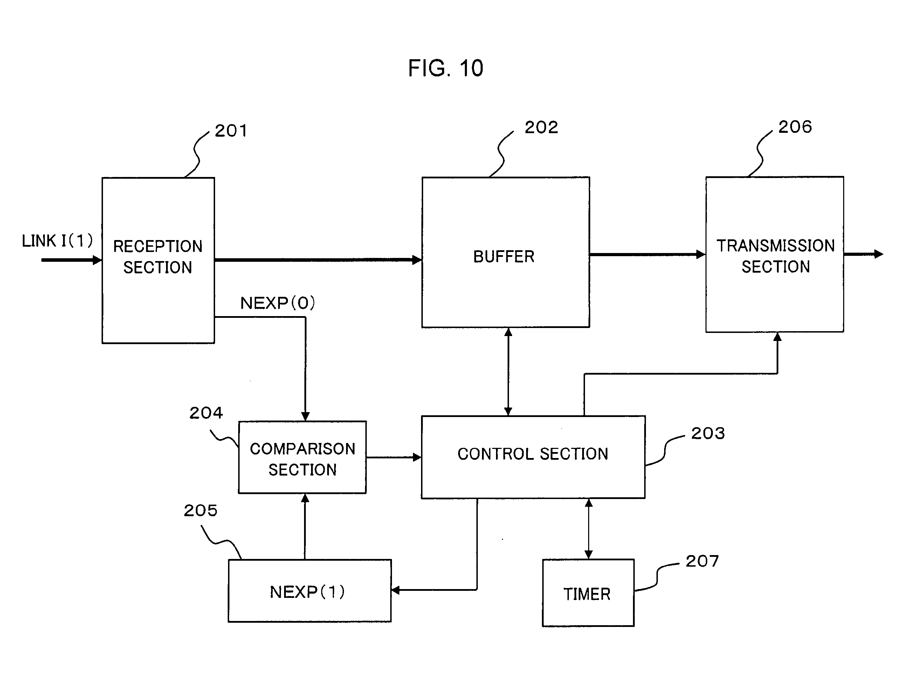

FIG. 10 is a block diagram schematically showing a circuit for transmission wait control in a communication device according to the second exemplary embodiment of the present invention. This circuit for transmission wait control is provided to the communication device 60 located downstream. Note that the same reference numerals are applied to those blocks having the same functionality as the blocks shown in FIG. 6, and a description thereof will be simplified.

The communication device 60 includes a reception section 201 connected to the link I(1). The reception section 201 stores in a buffer 202 a packet (an arrival packet) normally received from the upstream communication device 50 through the link I(1) and also outputs NEXP(0) received from the communication device 50 to a comparison section 204.

A control section 203 manages the packets in the buffer 202, based on the packet numbers of arrival packets (arrival packet numbers), and identifies the packet numbers of non-arrival packets (non-arrival packet numbers), which include a packet in which an error is detected. Subsequently, the control section 203 generates a data reception state (1) based on the arrival packet numbers and/or non-arrival packet numbers and stores the smallest one of the non-arrival packet numbers in NEXP(1), which is stored in a memory 205.

The comparison section 204 compares NEXP(0) received from the communication device 50 with NEXP(1) of its own device (the communication device 60) and outputs the result of this comparison to the control section 203. The control section 203, as in the above-described first exemplary embodiment, determines the data transmission state for each packet, based on the result of the comparison by the comparison section 204 and the non-arrival packet number, thereby identifying a link in which an error or a delay has occurred.

The control section 203 is provided in advance with a transmission wait time T_LONG equivalent to the maximum amount of delay of the link I(0) and a transmission wait time T_SHORT equivalent to the maximum amount of delay of the link (1). The control section 203 sets a timer 207 for the transmission wait time corresponding to the identified link. If the delayed packet does not arrive before the timer 207 expires, the control section 203 allows a transmission section 206 to transmit the arrival packets stored in the buffer 202 after expiration. An example of transmission wait control by the control section 203 will be described next.

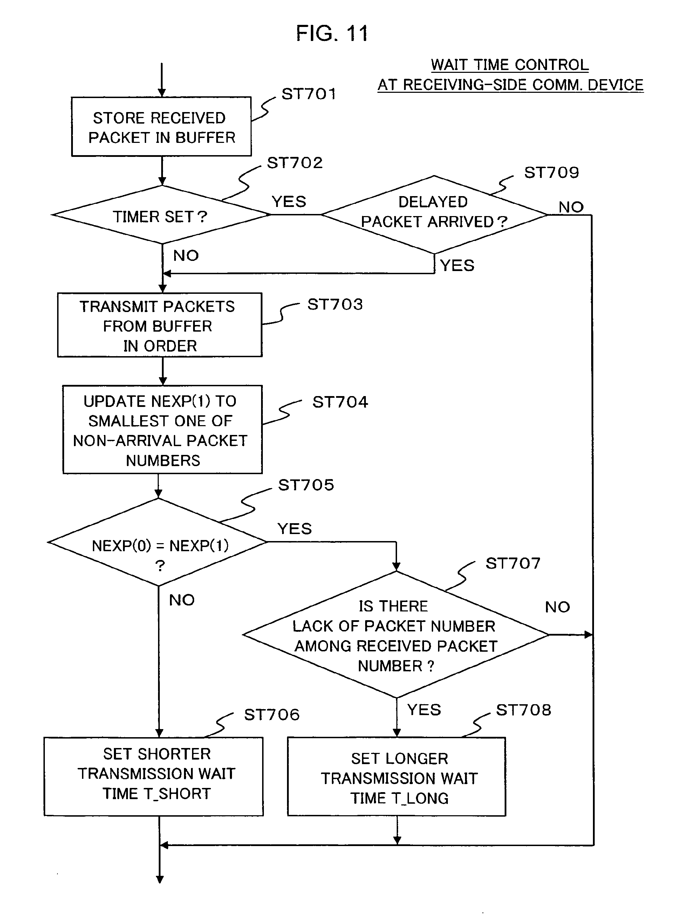

FIG. 11 is a flowchart showing the transmission wait control performed at a communication device (here, communication device 60) according to the second exemplary embodiment of the present invention. First, a packet normally received by the reception section 201 is stored in the buffer 202 (ST701). The control section 203 determines whether or not the timer 207 is set for a transmission wait time (ST702). When the timer 207 is not set or has expired (ST702: NO), the control section 203 sequentially reads stored packets from the buffer 202 and allows the transmission section 206 to transmit the packets (ST703). Further, the control section 203 identifies non-arrival packet numbers, based on arrival packet numbers, and stores the smallest one of the non-arrival packet numbers in NEXP(1) in the memory 205 (ST704).

Subsequently, under the control of the control section 203, the comparison section 204 compares NEXP(0) received from the communication device 50 with NEXP(1) of its own device (the communication device 60), and the control section 203 determines whether or not NEXP(0) =NEXP(1) (ST705). When NEXT (0) and NEXP(1) do not match with respect to the arrival/non-arrival of the packet in question (ST705: NO), it is determined that an error or a delay has occurred in the link I(1) with respect to this packet, and the timer 207 is set for the shorter transmission wait time T_SHORT, which covers the maximum amount of delay of the link I(1) (ST706).

When NEXT (0) = NEXP(1) with respect to the arrival/non-arrival of the packet in question (ST705: YES), then in order to determine whether the transmission is normal or an error or a delay has occurred in the link I(0), the control section 203 determines whether or not the arrival packet numbers are consecutive, in other words, whether or not there is any missing packet number among the arrival packet numbers (ST707).

If there is a missing packet number (ST707: YES), the control section 203 determines that an error or a delay has occurred in the link I(0) with respect to the packet in question, and the timer 207 is set for the longer transmission wait time T_LONG, which covers the maximum amount of delay of the link I(0) (ST708). If there is no missing packet number, that is, if the arrival packet numbers are consecutive (ST707: NO), the control section 203 determines that the non-arrival packet is a packet that should be arriving next and that the transmission is normal so far. Therefore, the setting of the timer 207 is not performed.

When a received packet is stored in the buffer 202 after the timer 207 has been thus set for the shorter transmission wait time T_SHORT or longer transmission wait time T_LONG and before the timer 207 expires (ST702: YES), then the control section 203 determines whether or not this received packet is the packet corresponding to the packet number stored in NEXP(1) (ST709).

If the received packet is the corresponding packet (ST709: YES), the control of the control section 203 returns to the step ST703, where the control section 203 sequentially reads stored packets from the buffer 202 and allows the transmission section 206 to transmit the packets (ST703). Thus, part or all of the packets with consecutive packet numbers stored in the buffer 202 are transmitted out. Accordingly, in this new state, the control section 203 updates NEXP(1), with the smallest one of non-arrival packet numbers (ST704). Thereafter, the control of the control section 203 moves on to the above-described step ST705.

If the received packet is not the corresponding packet (ST709: NO), the control section 203 does not carry out the steps ST703 to ST708, leaving the received packet stored in the buffer 202.

Note that the control section 203 and comparison section 204 can also be implemented by executing a program for carrying out the above-described transmission wait control, on a program-controlled processor such as a CPU or a computer.

### 2.3) Advantages

In the method for data transmission according to the second exemplary embodiment of the present invention, the length of time for which a downstream node waits for a packet is set appropriately depending on the transmission state of each packet determined by using the above-described method for data transmission state determination according to the first exemplary embodiment. Thus, it is possible to ensure the transmission of consecutive packets with high reliability. In addition, since an unnecessary delay can be avoided, it is possible to reduce the delay as a whole in packet transmission.

### 2.4) Second example

Next, a description will be given of specific operations performed when delay variation or an error has occurred in the link I(1) or I(0).

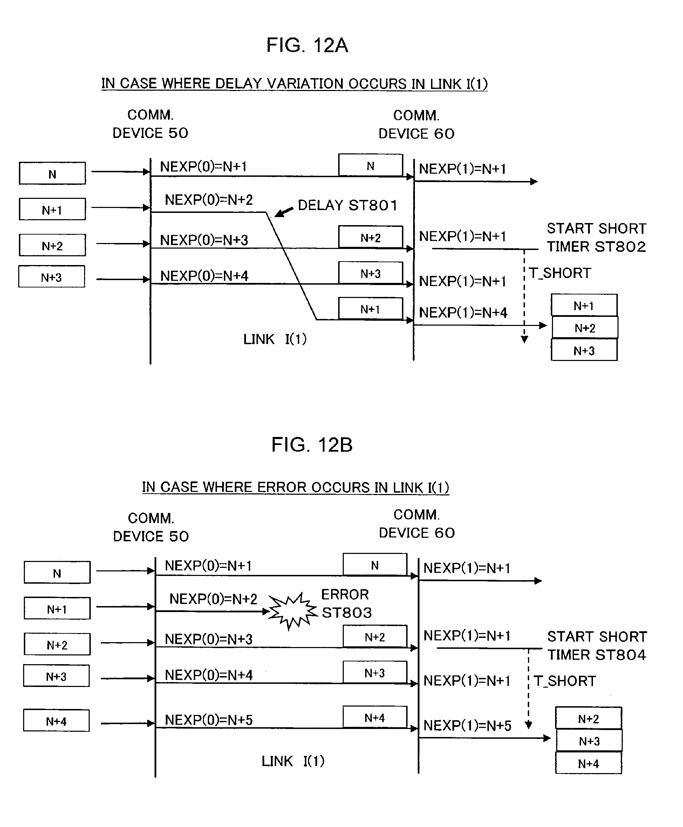

FIG. 12A is a sequence diagram showing an example of packet transmission according to a second example of the present invention in the case where delay variation occurs in the link I(1). FIG. 12B is a sequence diagram showing an example of packet transmission according to the first example of the present invention in the case where an error occurs in the link I(1).

Referring to FIG. 12A, upon the arrival of a packet "N", the communication device 50 stores in NEXP(0) the packet number of a packet that should be arriving next, "N + 1", and transmits this NEXP(0) along with the packet "N" to the downstream communication device 60. The communication device 60, upon the arrival of the packet "N", stores in NEXP(1) the packet number of a packet that should be arriving next, "N + 1". That is, NEXP(0) = NEXP(1), which means that NEXP(0) and NEXP(1) match.

Subsequently, upon the arrival of a packet "N + 1", the communication device 50 stores in NEXP(0) the packet number of a packet that should be arriving next, "N + 2", and transmits this NEXP(0) (= N + 2) along with the packet "N + 1" to the downstream communication device 60. In this event, it is assumed the packet "N + 1" is delayed in the link I(1) (ST801) and that a subsequent packet "N + 2" has arrived earlier at the communication device 60. At this time, since NEXP(0) = N + 3 is notified from the communication device 50, the control section 203 of the communication device 60 determines that NEXP(0) ≠ NEXP(1), and starts the timer 207 after setting it for the shorter transmission wait time T_SHORT (ST802).

Thereafter, it is assumed that, before the shorter transmission wait time T_SHORT elapses, a subsequent packet "N + 3" has arrived along with NEXP(0) = N + 4 and then the delayed packet "N + 1" has arrived. Upon the arrival of the packet "N + 1", the control section 203 of the communication device 60 reads the consecutively numbered packets "N + 1" to "N + 3" from the buffer 202 and allows the transmission section 206 to transmit the packets downstream. At the same time, the control section 203 updates NEXP(1) in the memory 205 to the latest value, "N + 4".

As described above, based on the determination that NEXP(1) ≠ NEXP(0), the downstream communication device 60 can determine that an error or a delay has occurred in the link I(1), and thereby can set the timer 207 for the shorter transmission wait time T_SHORT, which can cover at least the expected maximum delay time of the link I(1). That is, the transmission of consecutive packets can be carried out, only with a delay of the shorter transmission wait time T_SHORT.

On the other hand, referring to FIG. 8B, when an error has occurred in the link I(1) with respect to the packet "N + 1" (ST803), then, since NEXP(0) and NEXP(1) do not match, the control section 203 of the communication device 60 sets the timer 207 for the shorter transmission wait time T_SHORT and then starts the timer 207 as described above (ST804). In this case, however, since the packet "N + 1" in question does not arrive at the communication device 60, the timer 207 expires. Upon the expiration, the control section 203 sequentially reads subsequent packets "N + 2" to "N + 4" that have arrived so far, and then allows the transmission section 206 to transmit the packets downstream. Accordingly, although the packet "N + 1" is missing among a sequence of the packets "N" to "N + 4", the delay in packet transmission is only as long as the shorter transmission wait time T_SHORT, and consequently a long delay in transmission can be avoided.

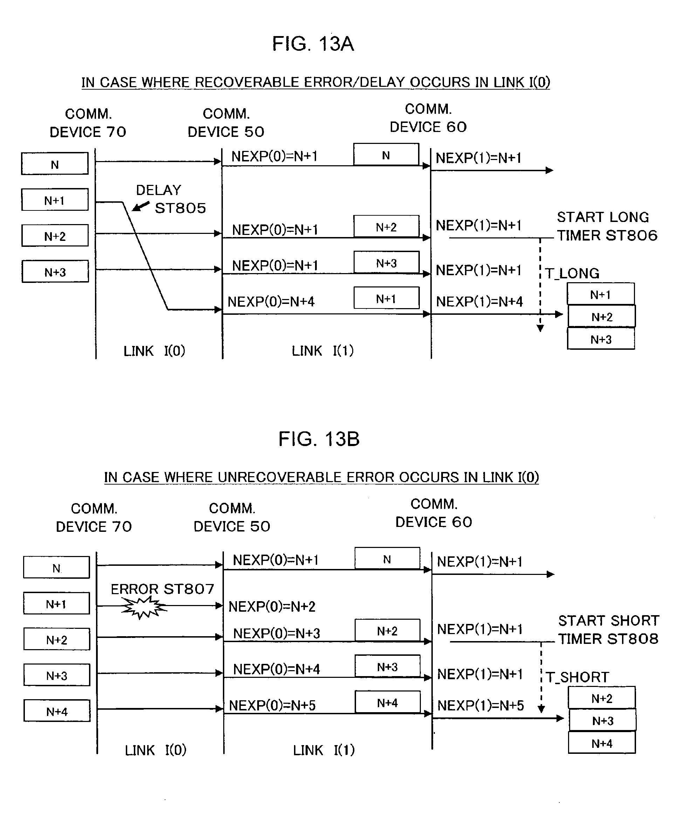

FIG. 13A is a sequence diagram showing an example of packet transmission according to the second example of the present invention in the case where a recoverable error or delay occurs in the link I(0). FIG. 13B is a sequence diagram showing an example of packet transmission according to the second example of the present invention in the case where an unrecoverable error occurs in the link I(0). Here, it is assumed that a packet retransmission control function (such as, for example, HARQ/ARQ) is provided to each of the communication devices 70 and 50.

Referring to FIG. 13A, for example, it is assumed that an error has occurred in the link I(0) with respect to a packet "N + 1" (ST805). If the communication device 50 determines that the error is recoverable by using a predetermined number of retransmission processes, the packet "N + 1" in question can be expected to arrive at the communication device 50 after a delay in the link I(0). In this case, a subsequent packet "N + 2" arrives earlier at the communication device 50. However, in the case where the error in the packet "N + 1" is a recoverable error, the communication device 50 maintains NEXP(0) = N + 1 and transmits this NEXP(0) along with the packet "N + 2" to the communication device 60. The communication device 60 also still has NEXP(1) = N + 1, and accordingly NEXP(0) = NEXP(1) = N + 1. However, the control section 203 of the communication device 60 determines that an error or a delay has occurred in the link I(0), because the packet "N + 1" is missing among arrival packets.
Accordingly, the control section 203 sets the timer 207 for the longer transmission wait time T_LONG, which can cover the expected maximum delay time of the link I(0), and then starts the timer 207 (ST806).

When the delayed packet "N + 1" has arrived at the communication device 50, the communication device 50 updates NEXP(0) to "N + 4" and transmits the packet "N + 1" and this NEXP(0) to the communication device 60. If the packet "N + 1" in question has arrived at the communication device 60 before the longer transmission wait time T_LONG elapses, the control section 203 of the communication device 60 reads from the buffer 202 the consecutively numbered packets "N + 1" to "N + 3" and allows the transmission section 206 to transmit the packets downstream. At the same time, the control section 203 updates NEXP(1) in the memory 205 to the latest value, "N + 4".

As described above, when NEXP(1) and NEXP(0) match but there is a missing packet number, the downstream communication device 60 can determine that an error or a delay has occurred in the link I(0), and thereby can set the timer 207 for the longer transmission wait time T_LONG, which can cover at least the expected maximum delay time of the link I(0). That is, the communication device 60 can transfer downstream the packets consecutively transmitted from the communication device 70, with high reliability.

On the other hand, referring to FIG. 13B, there are some cases where an error in a packet "N + 1" cannot be recovered even through transmission processes in the link I(0) (ST807). For example, in the case of data transmission requiring the real-time characteristics like VoIP, if a setting is made such that retransmission by HARQ, which is a high-speed retransmission process, is performed one time and that retransmission by ARQ is not performed, then when an error is detected through ARQ by the communication device 50, it is determined that the error is an unrecoverable error. In the case where HARQ and ARQ are both inhibited, it is determined, when an error occurs, that the error is an unrecoverable error. When such an unrecoverable error has occurred (ST807), the communication device 50 updates NEXP(0) to "N + 2".

Subsequently, when a packet "N + 2" has arrived, the communication device 50 updates NEXP(0) to "N + 3" and transmits this NEXP(0) along with the arrival packet "N + 2" to the communication device 60. Thereafter, the communication device 50 sequentially transmits packets "N + 3" and "N + 4" arriving from the communication device 70 to the communication device 60.

The communication device 60 has been maintaining NEXP(1) = N + 1. Therefore, when the communication device 60 has received NEXP(0) = N + 3 along with the packet "N + 2", NEXP(0) and NEXP(1) do not match. Accordingly, as described above, the control section 203 of the communication device 60 sets the timer 207 for the shorter transmission wait time T_SHORT and then starts the timer 207 (ST808). However, since the packet "N + 1" in question does not arrive at the communication device 60 in this case, the timer 207 expires. Upon the expiration, the control section 203 sequentially reads from the buffer 202 the subsequent packets "N + 2" to "N + 4" that have arrived so far, and allows the transmission section 206 to transmit the packets downstream.

As described above, when an unrecoverable error has occurred in the link I(0) with respect to the packet "N + 1", the other subsequent packets "N + 2" to "N + 4" are transmitted without waiting for the missing packet for a long time (the longer transmission wait time T_LONG). Thereby, the delay in packet transmission is only as long as the shorter transmission wait time T_SHORT, and accordingly a long delay in transmission can be avoided.

### 2.5) Third example

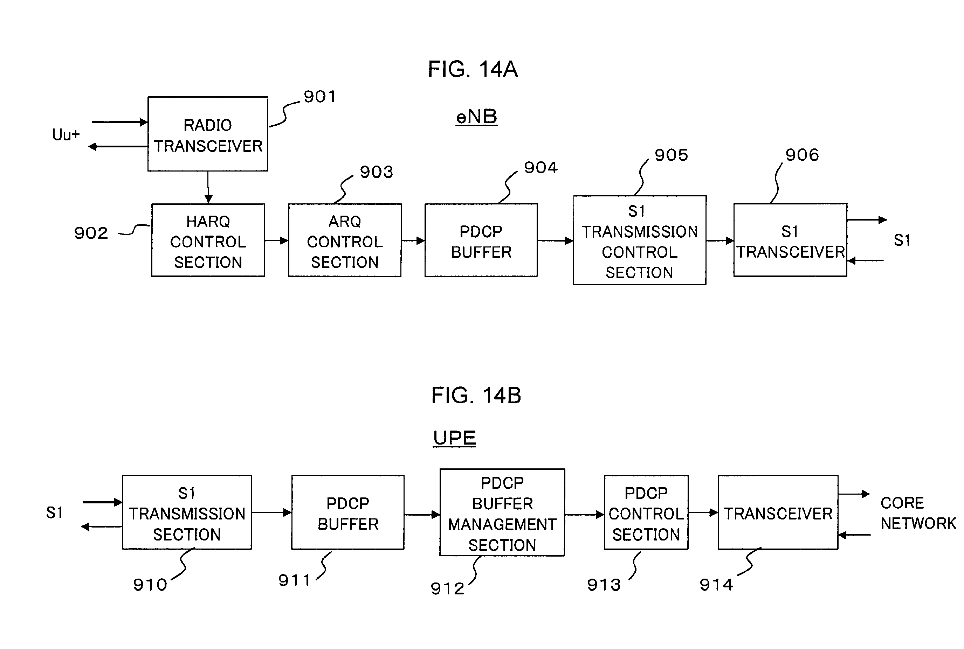

Next, a third example of the present invention, which is an application of the second exemplary embodiment of the present invention into a mobile communications system, will be described with reference to FIGS. 14A to FIGS. 16B. As to the correlation with the blocks in FIG. 9, a base station eNB corresponds to the communication device 50, a user data processing device UPE (User Plane Entity) corresponds to the communication device 60, and a mobile station UE (User Equipment) corresponds to the communication device 70. Moreover, it is assumed that the overall network is structured as shown in FIG. 1A. Note that where appropriate, the base station eNB and user data processing device UPE will be simply expressed as eNB and UPE, respectively.

FIG. 14A is a block diagram showing a schematic configuration of a base station eNB in the mobile communications system according to the third example of the present invention. FIG. 14B is a block diagram showing a schematic configuration of a UPE in the mobile communications system according to the third example of the present invention.

Referring to FIG. 14A, the base station eNB connects to a mobile station UE through a radio link Uu+ and connects to the UPE through a link S1. The base station eNB includes: a radio transceiver 901, which communicates with the mobile station UE through the radio link Uu+; a HARQ control section 902 and an ARQ control section 903, which execute retransmission processes as described earlier with the mobile station UE; a PDCP buffer 904, which stores a PDCP packet to be transmitted between the mobile station UE and UPE; and an S 1 transmission control section 905 and an S 1 transceiver 906, which carry out packet transmission and reception to/from the UPE.

In the present example, it is assumed that a control section (not shown) updates NEXP(ENB), which indicates the above-described data reception state at the base station eNB. Additionally, it is assumed that the smallest one of non-arrival packet numbers is stored in NEXP(ENB), as in the above-described second example. An arrival packet from the mobile station UE and the updated NEXP(ENB) are transmitted to the UPE, according to the control by the S 1 transmission control section 905.

Referring to FIG. 14B, the UPE connects to the base station eNB through the link S 1 and stores a PDCP packet arriving from the mobile station UE in a PDCP buffer 911. Under the management of a PDCP buffer management section 912, the PDCP packet is transmitted to a core network through a PDCP control section 913 and a transceiver 914.

In the present example, it is assumed that the PDCP buffer management section 912 updates NEXP(UPE), which indicates the above-described data reception state at the UPE, and also performs comparison with NEXP(ENB) received from the base station eNB, setting of the transmission wait time T_SHORT/T_LONG, and the like. Additionally, it is assumed that the smallest one of non-arrival packet numbers is stored in NEXP(UPE), as in the above-described second example.

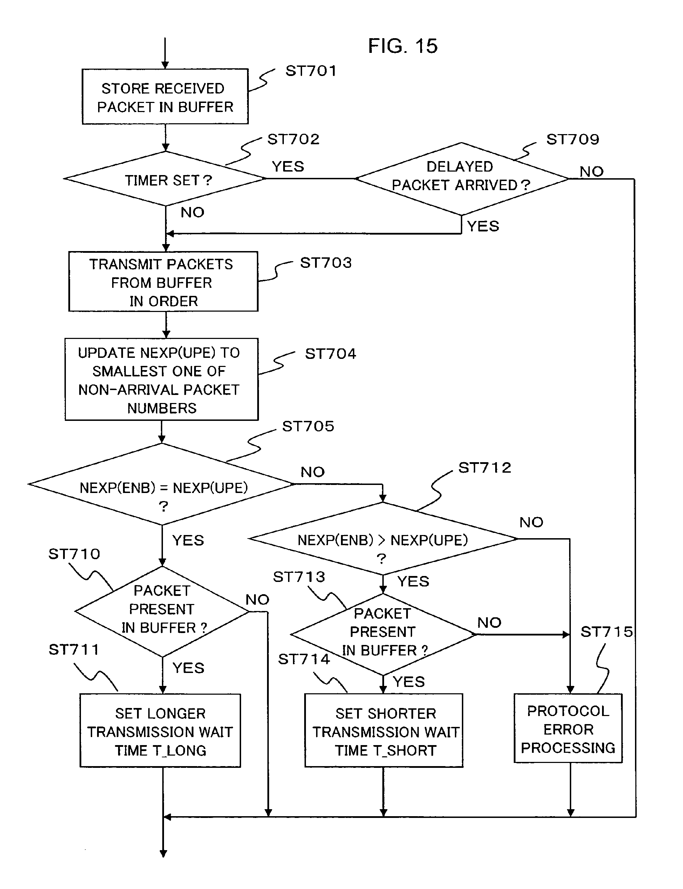

FIG. 15 is a flowchart showing transmission wait control performed at the UPE, according to the third example of the present invention. First, a packet normally received from the base station eNB is stored in the PDCP buffer 911 (ST701). The PDCP buffer management section 912 determines whether or not a timer is set for a transmission wait time (ST702). When the timer is not set or has expired (ST702: NO), the PDCP buffer management section 912 sequentially reads stored packets from the PDCP buffer 911 and, through the PDCP control section 913, allows the packets to be transmitted from the transceiver 914 (ST703). Further, the PDCP buffer management section 912 identifies non-arrival packets, based on arrival packet numbers, and stores the smallest one of the non-arrival packet numbers in NEXP(UPE) (ST704).

Subsequently, the PDCP buffer management section 912 compares NEXP(ENB) received from the base station eNB with NEXP(UPE) of its own device (the UPE) and determines whether or not NEXP(ENB) = NEXP(UPE) (ST705).

When NEXP(ENB) = NEXP(UPE) (ST705: YES), then in order to determine whether the transmission is normal or an error or a delay has occurred in the radio link Uu+, the PDCP buffer management section 912 checks whether or not a packet is stored in the PDCP buffer 911 (ST710). This is because if the arrival packet numbers had been consecutive, the corresponding arrival packets should have already been transmitted in the step ST703, and no packet should have remained in the PDCP buffer 911.

Accordingly, if no packet is in the PDCP buffer 911 (ST710: NO), the PDCP buffer management section 912 does not perform the setting of the timer because the transmission is normal. If a packet is stored in the PDCP buffer 911 (ST710: YES), the PDCP buffer management section 912 determines that an error or a delay has occurred in the link Uu+, and sets the timer for the longer transmission wait time T_LONG, which covers the maximum amount of delay of the radio link Uu+ (ST711).

When NEXP(ENB) ≠ NEXP(UPE) (ST705: NO), the PDCP buffer management section 912 determines whether or not NEXP(ENB) > NEXP(UPE) (ST712). This is because if an error or a delay has occurred in the link S1, NEXP(ENB) indicates the packet number of a later packet (i.e., a larger packet number).

When NEXP(ENB) > NEXP(UPE) (ST712: YES), the PDCP buffer management section 912 checks whether or not a packet is stored in the PDCP buffer 911 (ST713). If a packet is stored in the PDCP buffer 911 (ST713: YES), the PDCP buffer management section 912 determines that an error or a delay has occurred in the link S1, and sets the timer for the shorter transmission wait time T_SHORT, which covers the maximum amount of delay of the link S 1 (ST714). When NEXP(ENB) > NEXP(UPE) but no packet is stored in the PDCP buffer 911 (ST713: NO), or when NEXP(ENB) < NEXP(UPE) (ST712: NO), then protocol error processing is carried out (ST715). A specific example of the operation of the UPE will be described next.

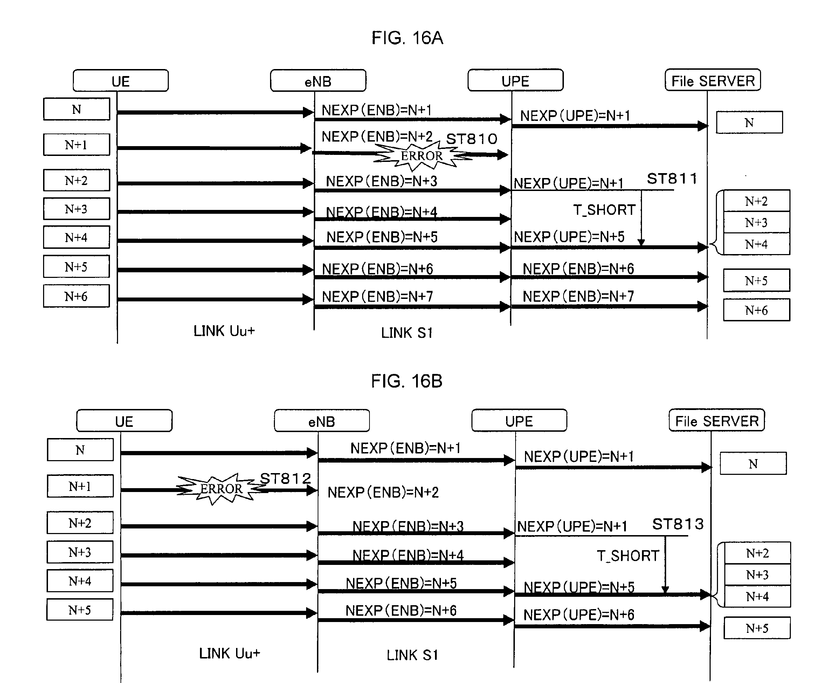

FIG. 16A is a sequence diagram showing an example of the operation of the UPE in the case where an error occurs in the link S 1 in the mobile communications system according to the third example of the present invention. FIG. 16B is a sequence diagram showing an example of the operation of the UPE in the case where an unrecoverable error occurs in the link Uu+ in the mobile communications system according to the third example of the present invention.

The operation shown in FIG. 16A is carried out as described in FIG. 12B. Specifically, when an error has occurred in the link S 1 with respect to a packet "N + 1" (ST810), NEXP(ENB) and NEXP(UPE) do not match. Therefore, the PDCP buffer management section 912 of the UPE sets the timer for the shorter transmission wait time T_SHORT and then starts the timer as described already (ST811). In this case, since the packet "N + 1" in question does not arrive at the UPE, the timer expires. Therefore, subsequent packets "N + 2" to "N + 4" that have arrived so far are sequentially read from the PDCP buffer 911 and transmitted to the core network through the PDCP control section 913 and transceiver 914. Accordingly, although the packet "N + 1" is missing among a sequence of the packets "N" to "N + 4", the delay in packet transmission is only as long as the shorter transmission wait time T_SHORT, and consequently a long delay in transmission can be avoided.

Note that an example of the operation of the UPE in the case where delay variation occurs in the link S1 is as described in FIG. 12A, and therefore a description thereof will be omitted.

On the other hand, the operation shown in FIG. 16B is carried out as described in FIG. 13B. Specifically, when an unrecoverable error has occurred in the radio link Uu+ with respect to a packet "N + 1" (ST812), the base station eNB updates NEXP(ENB) of it own to "N + 2" and then to "N + 3" upon the arrival of a subsequent packet "N + 2", and transmits this NEXP(ENB) (= N + 3) along with the packet "N + 2" to the UPE. Since NEXP(ENB) and NEXP(UPE) do not match, the PDCP buffer management section 912 of the UPE sets the timer for the shorter transmission wait time T_SHORT and then starts the timer as described already (ST813). However, since the packet "N + 1" does not arrive at the UPE, the timer expires. Upon the expiration, the PDCP buffer management section 912 sequentially reads the subsequent packets "N + 2" to "N + 4" that have arrived so far, and transmits the packets to the core network through the PDCP control section 913 and transceiver 914. Accordingly, although the packet "N + 1" is missing among a sequence of the packets "N" to "N + 4", the UPE can transfer the packets from the mobile station UE to the core network without giving an unnecessarily long delay.

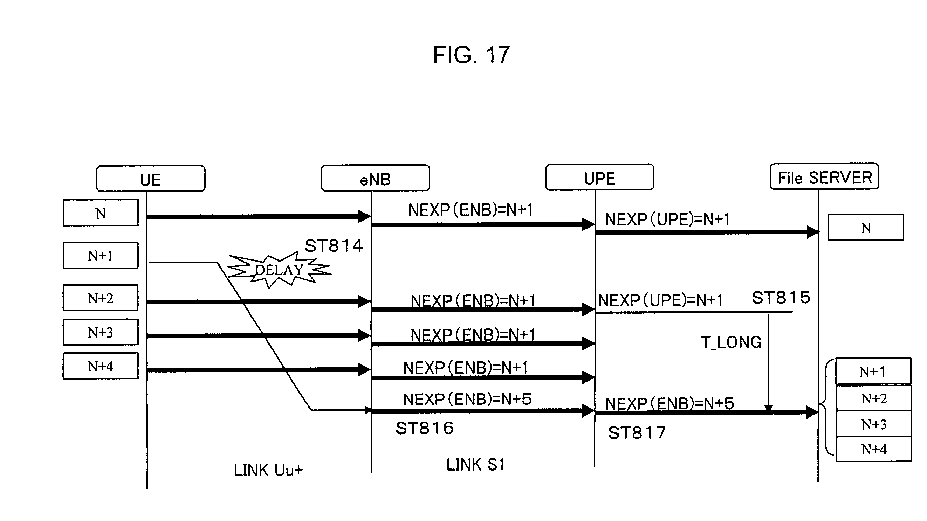

FIG. 17 is a sequence diagram showing an example of the operation of the UPE in the case where a recoverable error or delay occurs in the link Uu+ in the mobile communications system according to the third example of the present invention. The operation shown in FIG. 17 is carried out as described in FIG. 13A. Specifically, when an error has occurred in the link Uu+ with respect to a packet "N + 1" (ST814) and the base station eNB determines that the error is recoverable by using a predetermined number of retransmission processes, then the packet "N + 1" in question can be expected to arrive at the base station eNB after a delay in the link Uu+. In this case, a subsequent packet "N + 2" arrives earlier at the base station eNB. However, in the case where the error in the packet "N + 1" is a recoverable error, the base station eNB maintains NEXP(ENB) = N + 1 and transmits it along with the packet "N + 2" to the UPE. The UPE also still has NEXP(UPE) = N + 1, and therefore NEXP(ENB) = NEXP(UPE) = N + 1. However, the PDCP buffer management section 912 of the UPE determines that a recoverable error or delay has occurred in the link Uu+, because the packet "N + 1" is missing among arrival packets. Accordingly, the PDCP buffer management section 912 sets the timer for the longer transmission wait time T_LONG, which can cover the expected maximum delay time of the link Uu+, and then starts the timer (ST815).

When the delayed packet "N + 1" has arrived at the base station eNB after the arrival of a packet "N + 4", the base station eNB updates NEXP(ENB) to "N + 5" and transmits the packet "N + 1" and this NEXP(ENB) (= N + 5) to the UPE (ST816). If the packet "N + 1" in question has arrived at the UPE before the longer transmission wait time T_LONG elapses, the PDCP buffer management section 912 of the UPE reads from the buffer 911 the consecutively numbered packets "N + 1" to "N + 4" and transmits the packets to the core network through the PDCP control section 913 and transceiver 914 (ST817). At the same time, the PDCP buffer management section 912 updates NEXP(UPE) to the latest value, "N + 5".

As described above, in the case where NEXP(UPE) = NEXP(ENB) but a packet number is missing, the UPE can determine that a recoverable error or delay has occurred in the link Uu+, and thereby can set the timer for the longer transmission wait time T_LONG, which can cover at least the expected maximum delay time of the link Uu+. That is, the UPE can transfer downstream the packets consecutively transmitted from the mobile station UE, with high reliability.

### 3. Third exemplary embodiment

According to a third exemplary embodiment of the present invention, a condition check on a link is carried out between upstream and downstream nodes, and the transmission wait time, described above in the second exemplary embodiment, is controlled based on the result of this condition check. For example, as described above, when the link is in good condition and there is no missing packet, then a packet is normally transmitted. The transmission wait control is started when the downstream node detects that NEXP(0) and NEXP(1) do not match or that there is a missing packet among arrival packets. On the other hand, when a deterioration of the link is detected through a condition check, the upstream node holds packets for a certain period of time and, if the link is recovered in the meantime, transmits the packets to the downstream node. In the case where the link is deteriorated and the upstream node temporarily holds packets while the downstream node is performing the transmission wait control, then the transmission wait time set in the downstream node is prolonged by the holding period. Hereinafter, the third exemplary embodiment will be described in more detail.

### 3.1) System configuration

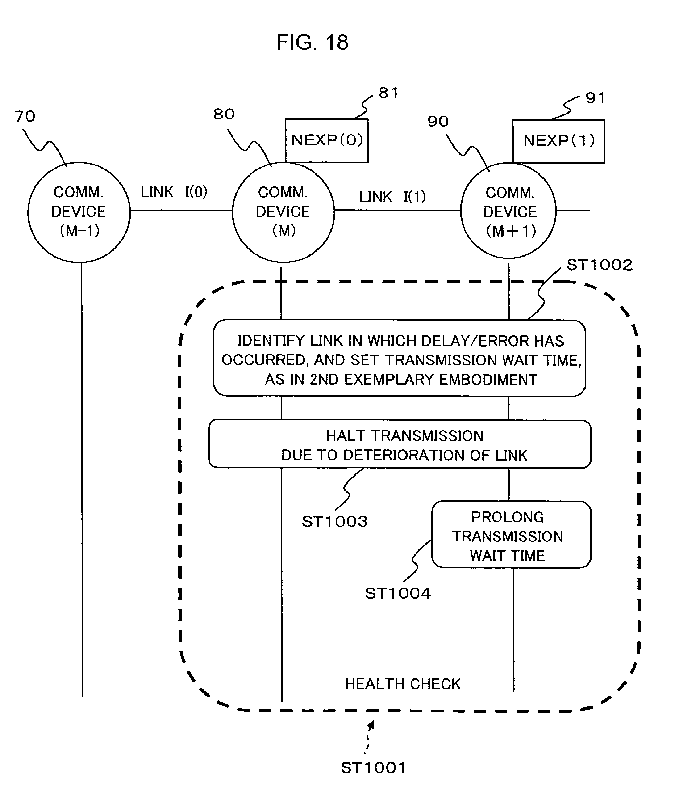

FIG. 18 is a schematic diagram of a communications system, to describe a method for data transmission according to the third exemplary embodiment of the present invention. The basic architecture of the system is similar to that shown in FIG. 9. Specifically, "M" represents a node (a communication device 80) located upstream in the direction of packet transmission, "M + 1" represents a node (a communication device 90) located downstream in the direction of packet transmission, and "M - 1" represents a node (a communication device 70) located further upstream of the communication device 80. The communication devices 80 and 90 are connected through a link I(1), and the communication devices 70 and 80 are connected through a link I(0). Moreover, the communication device 80 is provided with a memory 81, which stores NEXP(0), a piece of information indicative of a data reception state (0) at the communication device 80. Similarly, the communication device 90 is provided with a memory 91, which stores NEXP(1), a piece of information indicative of a data reception state (1) at the communication device 90.

The communication devices 80 and 90 according to the third exemplary embodiment of the present invention are provided with a condition check function to carry out a condition check on the link I(1). The communication devices 80 and 90 can carry out a condition check on the link I(1) (ST1001) by transmitting a packet or signal for measurement to/from each other and by measuring the received packet for a delay time, error rate, and the like.

Further, the communication device 80 is provided in advance with a transmission wait time T for which the communication device 80 halts the transmission of a packet when the link I(1) is deteriorated. The communication device 90 is provided in advance with transmission wait times T_SHORT and T_LONG equivalent to the maximum amounts of delay of the links I(0) and I(1), respectively. According to the present embodiment, the condition check function is used in combination with the transmission wait control according to the second exemplary embodiment described in FIG. 9, whereby more reliable data transmission can be accomplished.

First, as described in the second exemplary embodiment, the communication device 90 compares NEXP(0) received from the communication device 80 with NEXP(1) of its own, thereby identifying a link in which an error or a delay has occurred. Based on the identified link, the communication device 90 sets the transmission wait time T_SHORT/T_LONG (ST1002).

In a transmission wait state, when a condition check (ST1001) detects a deterioration of the link I(1) (ST1003), the communication device 80 starts the transmission wait time T and halts the transmission of arrival packets to the communication device 90. Meanwhile, the communication device 90, upon detection of the deterioration of the link I(1), prolongs the currently set transmission wait time T_SHORT/T_LONG by the transmission wait time T, which is set in the communication device 80 (ST1004). Thereby, the communication device 90 can transmit downstream the packets consecutively numbered by using a packet arriving from the communication device 80 after a delay of the time T.

### 3.2) Fourth example

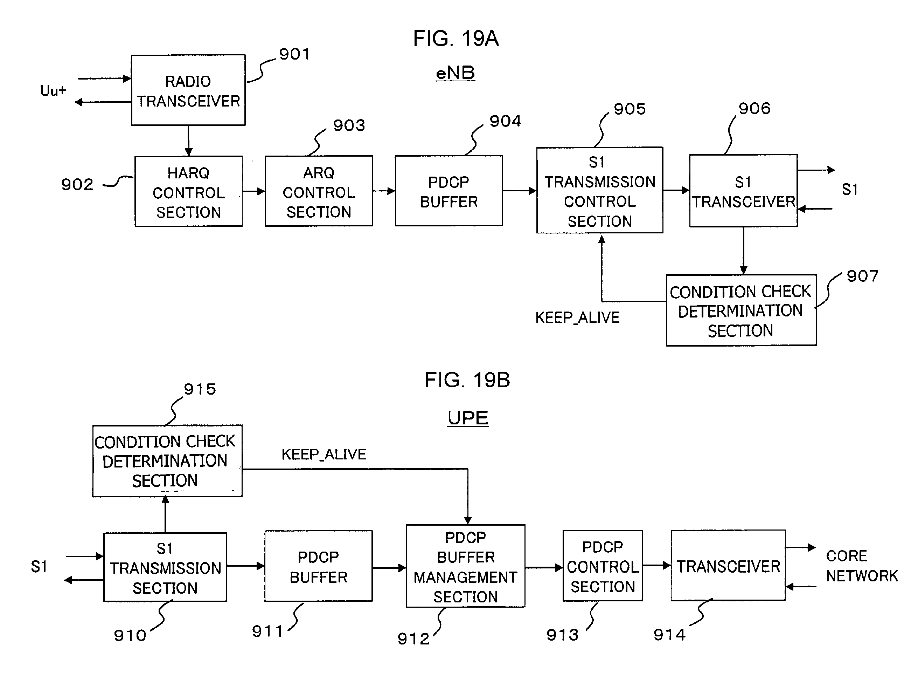

Next, a fourth example of the present invention, which is an application of the third exemplary embodiment of the present invention to a LTE system, will be described with reference to FIGS. 19A to 22. As to the correlation with the blocks in FIG. 18, a base station eNB corresponds to the communication device 80, a UPE corresponds to the communication device 90, and a mobile station UE corresponds to the communication device 70. Moreover, it is assumed that the overall network is structured as shown in FIG. 1A.

FIG. 19A is a block diagram showing a schematic configuration of a base station eNB in a mobile communications system according to the fourth example of the present invention. FIG. 19B is a block diagram showing a schematic configuration of UPE (User Plane Entity) in the mobile communications system according to the fourth example of the present invention. Note that the same reference numerals are applied to those blocks having the same functionality as the blocks in FIGS. 14A and 14B, and a description thereof will be omitted where deemed appropriate.

Referring to FIG. 19A, the base station eNB according to the present example is provided with a condition check determination section 907 in addition to the configuration shown in FIG. 14A. The condition check determination section 907 carries out a condition check on a link S 1 by comparing a result of measurement, such a delay and an error rate of a packet from the UPE received by a S 1 transceiver 906, with a predetermined threshold value. When the link S 1 is in good condition, the condition check determination section 907 sets a determination signal KEEP_ALIVE for "YES" and outputs the signal to an S 1 transmission control section 905. When the link S 1 is deteriorated, the condition check determination section 907 sets the determination signal KEEP_ALIVE for "NO" and outputs the signal to the S 1 transmission control section 905.

The S 1 transmission control section 905 determines, depending on the determination signal KEEP_ALIVE, whether or not to transmit the packets stored in a PDCP buffer 904 out to the link S1. If the link S 1 is in good condition with the determination signal KEEP_ALIVE = YES, the S 1 transmission control section 905 sequentially transmits the packets stored in the PDCP buffer 904 to the UPE through the link S1, as described already.

On the other hand, when a deterioration of the link S 1 is detected with the determination signal KEEP_ALIVE = NO, the S 1 transmission control section 905 starts a timer after setting it for the transmission wait time T and stores an arrival packet from the mobile station UE in the PDCP buffer 904. When the determination signal KEEP_ALIVE becomes "YES" before the transmission wait time T elapses, the S 1 transmission control section 905 sequentially transmits the packets stored in the PDCP buffer 904 to the UPE through the link S1. If the determination signal KEEP_ALIVE still remains "NO" even after the transmission wait time T has elapsed, then protocol error processing may be performed, or the transmission wait time T may be prolonged.

Note that in the present example as well, NEXP(ENB) indicative of the above-described data reception state at the base station eNB is updated by a control section (not shown), as in the third example shown in FIG. 14A.

Referring to FIG. 19B, the UPE according to the present example is provided with a condition check determination section 915 in addition to the configuration shown in FIG. 14B. The condition check determination section 915 carries out a condition check on the link S1 by comparing a result of measurement, such as a delay and an error rate of a packet from the base station eNB received by a S 1 transmission section 910, with a predetermined threshold value. When the link S 1 is in good condition, the condition check determination section 915 sets a determination signal KEEP_ALIVE for "YES" and outputs the signal to a PDCP buffer management section 912. When the link S 1 is deteriorated, the condition check determination section 915 sets the determination signal KEEP_ALIVE for "NO" and outputs the signal to the PDCP buffer management section 912.

In the present example as well, the PDCP buffer management section 912 performs the updating of NEXP(UPE), which indicates the above-described data reception state at the UPE, as well as the comparison of NEXP(UPE) with NEXP(ENB) received from the base station eNB, the setting of the transmission wait time T_SHORT/T_LONG, and the like. Incidentally, it is assumed that the smallest one of non-arrival packet numbers is stored in NEXP(UPE), as in the third example.

Moreover, if the PDCP buffer management section 912 receives the determination signal KEEP_ALIVE = NO, which indicates a deterioration of the link S1, while the transmission wait time T_SHORT/T_LONG is set, then the PDCP buffer management section 912 according to the present example prolongs the currently set transmission wait time T_SHORT/T_LONG by the transmission wait time T, which is set in the base station eNB.

When the determination signal KEEP_ALIVE becomes "YES", telling that the link S 1 is recovered, then since packets stored at the base station eNB arrive, the PDCP buffer management section 912 can transmit the packets to a core network when the packet numbers become in consecutive order. Additionally, in the case where the link S 1 is not recovered or a missing packet does not arrive even after the transmission wait time T_SHORT/T_LONG plus the transmission wait time T have elapsed, it is also possible that stored packets are transmitted to the core network.

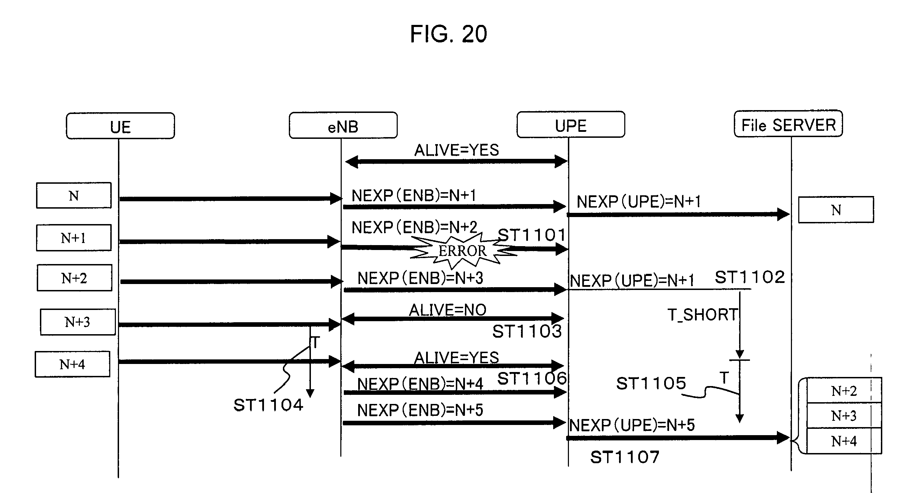

FIG. 20 is a sequence diagram showing an example of the operation of the UPE in the case where an error occurs in the link S 1 in the mobile communications system according to the fourth example of the present invention. When an error has occurred in the link S 1 with respect to a packet "N + 1" while normal packet transmission is being performed with the determination signal KEEP_ALIVE = YES (ST1101), then upon the arrival of a subsequent packet "N + 2", NEXT(ENB) and NEXP(UPE) fail to match. Accordingly, the PDCP buffer management section 912 of the UPE sets the timer for the shorter transmission wait time T_SHORT and then starts the timer as described already (ST1102).

Thereafter, if the link S1 is deteriorated, the condition check determination section 907 of the base station eNB and the condition check determination section 915 of the UPE output the determination signal KEEP_ALIVE = NO (ST1103). With this signal, the S 1 transmission control section 905 of the base station eNB starts the timer after setting it for the transmission wait time T (ST1104) and then stores arrival packets "N + 3" and "N + 4" from the mobile station UE in the PDCP buffer 904. Concurrently with this event, the PDCP buffer management section 912 of the UPE prolongs the currently set transmission wait time T_SHORT by the above-mentioned transmission wait time T, which is set in the base station eNB (ST1105).

If the determination signal KEEP_ALIVE becomes "YES", telling that the link S 1 is recovered, before the transmission wait time T elapses (ST1106), the S1 transmission control section 905 of the base station eNB sequentially transmits to the UPE the packets "N + 3" and "N + 4" stored in the PDCP buffer 904, along with "NEXP(NEB) = N + 4" and "NEXP(NEB) = N + 5", respectively.

When the timer has expired because the expected-to-arrive packet "N + 1" does not arrive, then the PDCP buffer management section 912 of the UPE reads from the PDCP buffer 911 the subsequent packets "N + 2" to "N + 4" that have arrived so far, and transmits the packets to the core network (here, to a file server) (ST1107). Thus, although the packet "N + 1" is missing among a sequence of the packets "N" to "N + 4", the delay in packet transmission is only as long as the shorter transmission wait time T_SHORT plus the transmission wait time T, and accordingly a long delay in transmission can be avoided.

Incidentally, in the case where delay variation has occurred in the link S1, the packet "N + 1" arrives after a delay within the shorter transmission wait time T_SHORT. Therefore, the PDCP buffer management section 912 can transmit the consecutively numbered arrival packets "N + 1" to "N + 4" to the core network (here, to the file server).

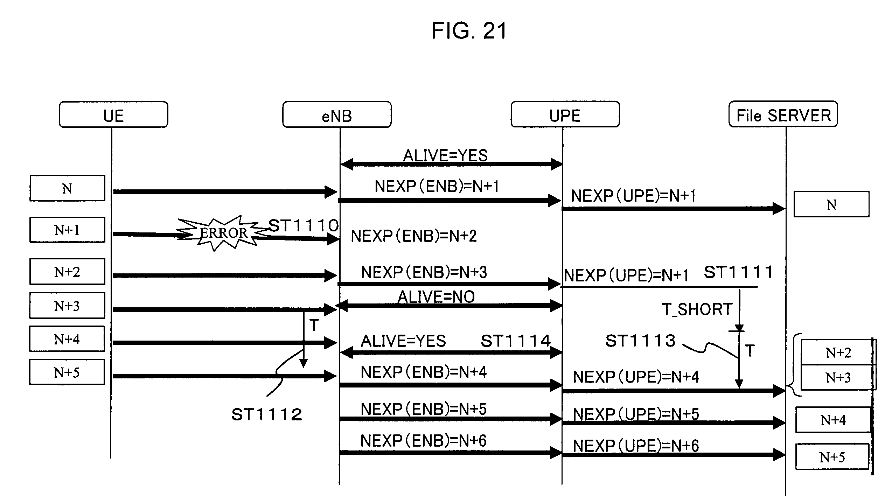

FIG. 21 is a sequence diagram showing an example of the operation of the UPE in the case where an unrecoverable error occurs in a radio link Uu+ in the mobile communications system according to the fourth example of the present invention. When an error that is unrecoverable through a retransmission process such as HARQ/ARQ has occurred in the radio link Uu+ with respect to a packet "N + 1" while normal packet transmission is being performed with the determination signal KEEP_ALIVE = YES (ST1110), then the base station eNB updates NEXP(ENB) on its own to "N + 2" and then to "N + 3" upon the arrival of a subsequent packet "N + 2", and transmits this NEXP(ENB) (= N + 3) along with the packet "N + 2" to the UPE. Since NEXP(ENB) and NEXP(UPE) do not match, the PDCP buffer management section 912 of the UPE sets the timer for the shorter transmission wait time T_SHORT and then starts the timer as described already (ST1111).

Thereafter, if the link S 1 is deteriorated, the condition check determination section 907 of the base station eNB and the condition check determination section 915 of the UPE output the determination signal KEEP_ALIVE = NO. With this signal, the S1 transmission control section 905 of the base station eNB starts the timer after setting it for the transmission wait time T (ST1112) and then stores arrival packets "N + 3" and "N + 4" from the mobile station UE in the PDCP buffer 904. Concurrently with this event, the PDCP buffer management section 912 of the UPE prolongs the currently set transmission wait time T_SHORT by the above-mentioned transmission wait time T, which is set in the base station eNB (ST1113).

If the determination signal KEEP_ALIVE becomes "YES", telling that the link S 1 is recovered, before the transmission wait time T elapses (ST1114), then the S1 transmission control section 905 of the base station eNB sequentially transmits the packets stored in the PDCP buffer 904 to the UPE.

When the timer has expired because the expected-to-arrive packet "N + 1" does not arrive, the PDCP buffer management section 912 of the UPE reads from the PDCP buffer 911 the subsequent packets "N + 2" and "N + 3" that have arrived so far, and transmits the packets to the core network (here, to a file server).

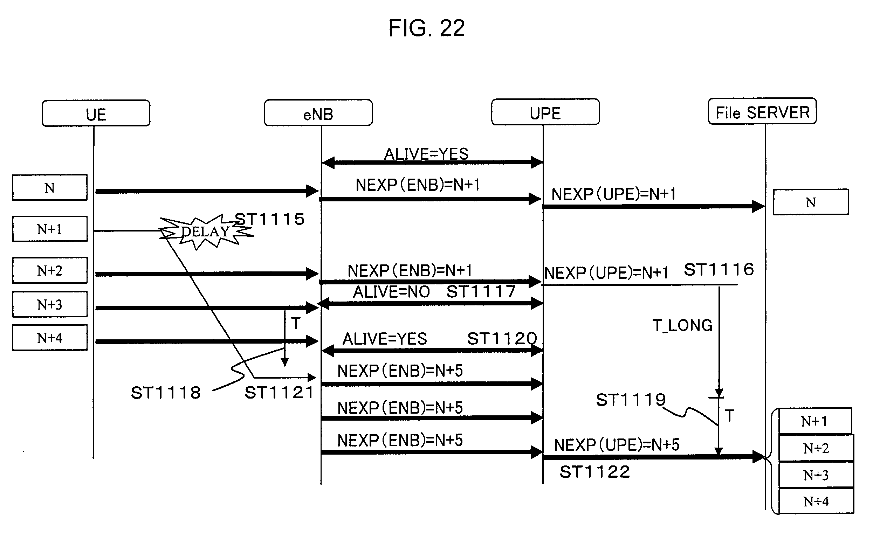

FIG. 22 is a sequence diagram showing an example of the operation of the UPE in the case where a recoverable error or delay has occurred in the radio link Uu+ in the mobile communications system according to the fourth example of the present invention. As described also in FIG. 17, when an error has occurred in the radio link Uu+ with respect to a packet "N + 1" (ST1115) and the base station eNB determines that the error is recoverable by using a predetermined number of retransmission processes, then the packet "N + 1" in question can be expected to arrive at the base station eNB after a delay in the radio link Uu+. In this case, a subsequent packet "N + 2" arrives earlier at the base station eNB. However, in the case where the error with respect to the packet "N + 1" is a recoverable error, the base station eNB maintains "NEXP(ENB) = N + 1" and transmits this NEXP(ENB) along with the packet "N + 2" to the UPE. The UPE still has "NEXP(UPE) = N + 1", and accordingly NEXP(ENB) = NEXP(UPE) = N + 1. However, since the packet "N + 1" is missing among arrival packets, the PDCP buffer management section 912 of the UPE determines that a recoverable error or delay has occurred in the radio link Uu+. Accordingly, the PDCP buffer management section 912 sets the timer for the longer transmission wait time T_LONG, which can cover the expected maximum delay time of the radio link Uu+, and then starts the timer (ST1116).

Thereafter, if the link S1 is deteriorated (ST1117), the condition check determination section 907 of the base station eNB and the condition check determination section 915 of the UPE output the determination signal KEEP_ALIVE = NO. With this signal, the S 1 transmission control section 905 of the base station eNB starts the timer after setting it for the transmission wait time T (ST1118) and then stores arrival packets "N + 3" and "N + 4" from the mobile station UE in the PDCP buffer 904. Concurrently with this event, the PDCP buffer management section 912 of the UPE prolongs the currently set transmission wait time T_LONG by the above-mentioned transmission wait time T, which is set in the base station eNB (ST1119).

If the determination signal KEEP_ALIVE becomes "YES", telling that the link S1 is recovered, before the transmission wait time T elapses (ST1120), then the S1 transmission control section 905 of the base station eNB sequentially transmits the packets stored in the PDCP buffer 904 to the UPE. In this event, when the delayed packet "N + 1" has arrived at the base station eNB after the arrival of the packet "N + 4" (ST1121), the base station eNB updates NEXP(ENB) to "N + 5" and, along with this NEXP(ENB), transmits to the UPE the packets "N + 1" to "N + 4" in order of arrival.

If the UPE receives the packet "N + 1" in question before the longer transmission wait time T_LONG prolonged by the time T elapses, the PDCP buffer management section 912 of the UPE reads the consecutively numbered packets "N + 1" to "N + 4" from the buffer 911 and transmits the packets to the core network through the PDCP control section 913 and transceiver 914 (ST1122). At the same time, the PDCP buffer management section 912 updates NEXP(UPE) to the latest value, "N + 5".

### 3.3) Advantages

According to the third exemplary embodiment of the present invention, upstream and downstream nodes carry out a condition check on a link with each other. If a deterioration of the link is detected through the condition check, the upstream node starts the transmission wait control by which the transmission of data to the downstream node is delayed by a predetermined period of time, and the downstream node prolongs, by the predetermined period of time, the transmission wait time set depending on the data transmission state. By this control for prolonging the transmission wait time, an unnecessary delay in data transmission can be avoided. In addition, by further waiting for the arrival of a missing packet, the consecutiveness can be ensured for the order of data transmission.

### 4. Fourth exemplary embodiment

The present invention can be effectively applied to the case where handover is performed for a mobile station. Hereinafter, a description will be given of data transmission at the time of handover according to a fourth exemplary embodiment of the present invention.

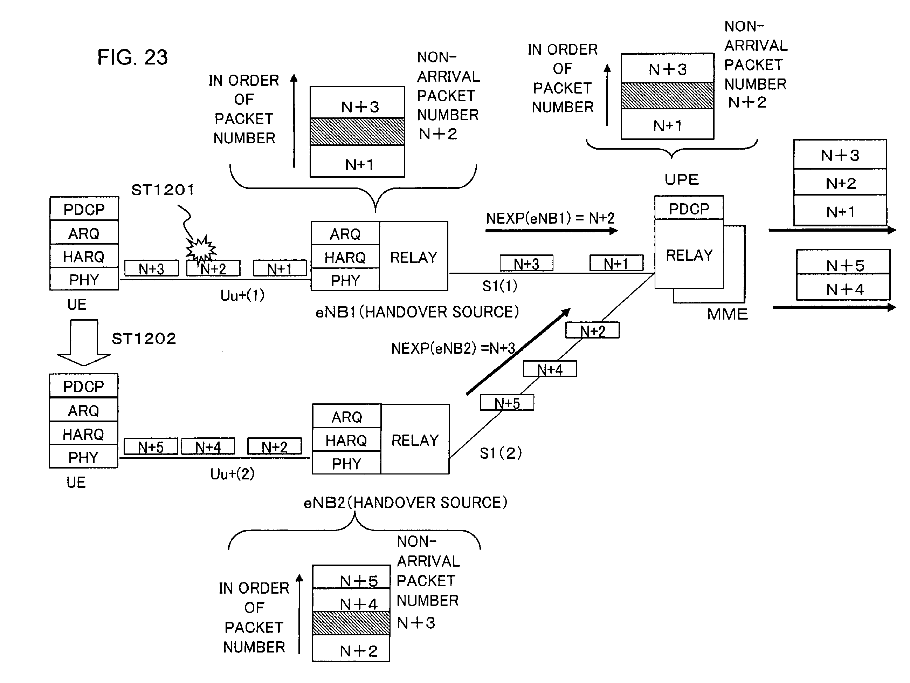

FIG. 23 is a schematic diagram of a mobile communications system, to describe a method for data transmission at the time of handover according to the fourth exemplary embodiment of the present invention. A mobile station UE, before handover occurs, transmits data to a base station eNB 1 through a radio link Uu+(1) and, after handover has occurred, transmits data to a base station eNB2 through a radio link Uu+(2). Control for retransmitting a non-arrival packet through the already-described HARQ/ARG process is performed between the mobile station UE and the base station eNB 1 or eNB2.

The base station eNB1, which is a handover source, transmits a packet arriving from the mobile station UE to a UPE and, at the same time, notifies the UPE of NEXP(eNB1), which indicates the data reception state at the base station eNB1, as described already. Here, when a packet "N + 1" has arrived from the mobile station UE, the base station eNB 1 transmits the packet "N + 1" to the UPE along with "NEXP(eNB1) = N + 2". Subsequently, when the non-arrival of a packet "N + 2", including the reception in error, is detected, the HARQ/ARQ process is started (ST1201). If a subsequent packet "N + 3" has arrived during this process, the base station eNB 1 transmits the packet "N + 3" to the UPE along with "NEXP(eNB1) = N + 2". Incidentally, it is assumed here that the smallest one of non-arrival packet numbers is stored in NEXP(eNB1) and notified to the UPE, as shown in the second and third exemplary embodiments as examples.

After the HARQ/ARQ process for the packet "N + 2" has been started (ST1201) and the subsequent packet "N + 3" has been transmitted to the base station eNB1, it is assumed that the mobile station UE moves to the base station eNB2, which is a handover destination (ST1202), and transmits the packet "N + 2" for retransmission and subsequent packets "N + 4" and "N + 5" to the base station eNB2.

Similarly, the handover-destination base station eNB2 also transmits a packet arriving from the mobile station UE to the UPE and, at the same time, notifies the UPE of NEXP(eNB2), which indicates the data reception state at the base station eNB2. Here, when the packet "N + 2" has arrived from the mobile station UE, the base station eNB2 transmits the packet "N + 2" to the UPE along with "NEXP(eNB2) = N + 3". Subsequently, when the packet "N + 4" has arrived, the base station eNB2 transmits the packet "N + 4" to the UPE along with "NEXP(eNB2) = N + 3". Here, it is also assumed that the smallest one of non-arrival packet numbers is stored in NEXP(eNB2) and notified to the UPE, as shown in the second and third exemplary embodiments as examples.

The movement of the mobile station UE, that is, the handover from the base station eNB 1 to the base station eNB2 is managed by MME. Under the mobility management of MME, the UPE carries out reordering of the packets that have arrived from the base stations eNB 1 and eNB2. In this event, using NEXP(eNB1) from the base station eNB 1 and NEXP(eNB2) from the base station eNB2, the UPE can carry out the determination of a link in which an error or a delay has occurred (the first exemplary embodiment), the transmission wait control (the second exemplary embodiment), or the transmission wait control involving a condition check (the third exemplary embodiment), as described above.

According to the example shown in FIG. 23, the UPE first receives the packet "N + 1" from the base station eNB 1 along with "NEXP(eNB1) = N + 2" and, upon the arrival of the packet "N + 1", updates NEXP(UPE) of its own to "N + 2". Subsequently, when the UPE has received the packet "N + 3" from the base station eNB1 along with the same "NEXP(eNB1) = N + 2", the UPE determines that an error or a delay has occurred in the link Uu+(1) because NEXP(eNB1) = NEXP(UPE) = N + 2 but the packet numbers of the arrival packets are not consecutive. The UPE then sets a timer for the longer transmission wait time T_LONG and holds the transmission of the packets to the core network. When the UPE is notified from MME that a handover to the base station eNB2 has occurred for the mobile station UE, the UPE changes the source of the expected-to-arrive packet "N + 2" to the handover-destination base station eNB2 and waits for the packet to arrive from the base station eNB2.

When the packet "N + 2" has arrived from the handover-destination base station eNB2, the UPE transmits the packets "N + 1" to "N + 3" to the core network because consecutively numbered packets have gathered. When subsequent packets "N + 4" and "N + 5" have sequentially arrived, the UPE sequentially transmits these packets to the core network.

In the case where an error or a delay has occurred in a link S1(1) or S1(2) as well, the UPE can similarly continue the transmission wait control by changing the base station to control to a handover-destination base station eNB. In this manner, even if handover occurs, the UPE can identify a link in which an error or a delay has occurred, and can similarly continue the transmission wait control by changing the base station to control to a handover-destination base station eNB.

### 5. Various aspects

As described above, an object of the present invention is to provide a method and system for data transmission state determination by which a downstream node can determine the data transmission state.

Another object of the present invention is to provide a method and system for data transmission by which the transmission delay, as a whole, can be reduced in data transmission over a plurality of links having different maximum amounts of delay.

According to the present invention, a data reception state at an upstream node is notified to a downstream node and is compared with a data reception state at the downstream node, whereby the data transmission state is determined. The data reception state can include information about whether data arrives at each node (normal reception) and/or does not arrive (error reception). Thus, the downstream node can grasp the states of transmission of data that is transmitted through a plurality of nodes, and thus can identify a link in which an error or a delay has occurred.

For example, if data has been normally received by the upstream node but does not arrive at the downstream node, then it can be determined that data loss (including error occurrence) or delay occurs on a link between the upstream and downstream nodes. If no data arrives at both the upstream node and the downstream node, then it can be determined that data loss (including error occurrence) or delay occurs further upstream from the upstream node. Accordingly, the downstream node can select an appropriate countermeasure based on a link in which data loss/delay occurs.

According to the first exemplary embodiment, the downstream node compares the data reception state at the upstream node with the data reception state at the downstream node and determines whether data information stored in the downstream node includes any loss, grasping the states of transmission of each piece of data. The data reception state notified from the upstream node to the downstream node includes at least one of arrival data information and non-arrival data information.

According to the second exemplary embodiment, the downstream node performs transmission-waiting control according to an identified link in which an error or a delay has occurred. The transmission-waiting control sets a waiting time equal to or longer than a period of time as can cover the maximum amount of delay of the identified link.

According to the third exemplary embodiment, the condition check is performed on a link between the upstream node and the downstream node. If the link state is good, data transmission and transmission waiting control are performed as in the case of the above-described second exemplary embodiment. When the link state is deteriorated, the upstream node halts transmission of data and its data reception state to the downstream node until a predetermined time period has elapsed or the link state has been recovered. The downstream node prolongs the transmission wait time by the predetermined period of time for each piece of data.

It should be noted that a node means a communication device in general connected to a network. For example, a mobile station, a base station or the like in a mobile communications system, and a gateway, router, repeater a packet switch or the like in a core network can be included in the concept of a node.

As described above, a data reception state at an upstream node is notified to a downstream node and is compared with a data reception state at the downstream node, whereby the data transmission state is determined. Thus, the downstream node can grasp the states of transmission of data that is transmitted through a plurality of nodes, and thus can identify a link in which an error or a delay has occurred.

Accordingly, the downstream node can select suitable processing depending on the identified link. For example, in data transmission over a plurality of links having different maximum amounts of delay, the downstream node can set as long a waiting time as can cover the maximum amount of delay of the identified link. Accordingly, it is possible to avoid an unnecessarily long waiting time being set, and consequently it is possible to reduce the delay as a whole in transmission.

The present invention can be applied to data transmission systems in general in which data transmission is performed through a plurality of nodes. The present invention also can be applied to mobile communications systems including a radio link between a mobile station and a base station.

The present invention may be embodied in other specific forms without departing from the spirit or essential characteristics thereof. The above-described exemplary embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A method for determining a data transmission state in a system including a plurality of nodes (10, 20) through which data is transmitted, wherein any two nodes of the plurality of nodes are an upstream node and a downstream node with respect to a data transmission direction, comprising:
at the upstream node (10), notifying the downstream node of a data reception state (NEXP(0)) of the upstream node (ST12); and
at the downstream node (20), determining the data transmission state by comparing the data reception state of the upstream node and a data reception state (NEXP(1)) of the downstream node (ST22, ST23).

2. Method according to claim 1, wherein the data reception state indicates whether each piece of corresponding data has been normally received.

3. Method according to claim 1, wherein the data reception state indicates an earliest one of pieces of corresponding data that have not been normally received.

4. Method according to claim 2 or 3, wherein the data reception state in normal data transmission indicates a piece of corresponding data that should be arriving next.

5. Method according to claim 1, wherein for a piece of data that was not normally transmitted, the data transmission state indicates a link in which the piece of data was not normally transmitted (ST63).

6. Method according to claim 5, wherein for a piece of data that was not normally transmitted, the downstream node sets a transmission wait time corresponding to the link (ST64).

7. Method according to claim 6, further comprising:
at the upstream node and the downstream node, determining the condition of communication with each other (ST1001);
at the upstream node, starting a timer set for a predetermined period to halt the communication with the downstream node when the condition is deteriorated (ST1003); and
at the downstream node, prolonging the transmission wait time by the predetermined period when the condition is deteriorated in a state of setting the transmission wait time (ST1004).

8. A communication system for transmitting data through a plurality of nodes (10, 20), wherein any two nodes of the plurality of nodes are an upstream node and a downstream node with respect to a data transmission direction, wherein
the upstream node (10) comprises: a first detector for detecting a first data reception state of the upstream node; and a transmitter for transmitting the first data reception state to the downstream node, and
the downstream node (20) comprises: a second detector for detecting a second data reception state of the downstream node; and a downstream determination section (203) for determining a data transmission state by comparing the first data reception state and the second data reception state.

9. Communication system according to claim 8, wherein each of the first and second data reception states indicates whether each piece of corresponding data has been normally received.

10. Communication system according to claim 8, wherein each of the first and second data reception states indicates an earliest one of pieces of corresponding data that have not been normally received.

11. Communication system according to claim 9 or 10, wherein each of the first and second data reception states in normal data transmission indicates a piece of corresponding data that should be arriving next.

12. Communication system according to claim 8, wherein the determination section comprises a comparator (204) for comparing the first data reception state and the second data reception state for a piece of data that was not normally transmitted, wherein a link in which the piece of data was not normally transmitted is identified based on a comparison result.

13. Communication system according to claim 12, wherein the downstream node further comprises a first timer (207) which is set for a transmission wait time corresponding to the link for the piece of data that was not normally transmitted.

14. Communication system according to claim 13, wherein:
each of the upstream node and the downstream node further comprises a condition check section (907, 915) for determining the condition of communication between the upstream node and the downstream node;
the upstream node further comprises a second timer for halting the communication for a predetermined period when the condition is deteriorated; and
the downstream node further comprises a controller for prolonging the transmission wait time by the predetermined period when the condition is deteriorated in a state of setting the first timer for the transmission wait time.

15. Communication system according to claim 8, wherein the upstream node further comprises an upstream determination section for determining whether an error is recoverable when the error occurs in data received from upstream.

16. Communication system according to claim 15, wherein the upstream node does not update the first data reception state when the error is recoverable.

17. Communication system according to claim 15, wherein the upstream node updates the first data reception state as in normal data reception when the error is unrecoverable.

18. Communication device in a data communication system, comprising:
a receiver for receiving data from upstream;
a detector for detecting a data reception state from received data; and
a transmitter for transmitting the data reception state to downstream.

19. Communication device according to claim 18, wherein the data reception state indicates whether each piece of corresponding data has been normally received.

20. Communication device according to claim 18, wherein the data reception state indicates an earliest one of pieces of corresponding data that have not been normally received.

21. Communication device according to claim 19 or 20, wherein the data reception state in normal data transmission indicates a piece of corresponding data that should be arriving next.

22. Communication device according to claim 18, further comprising:
a condition check section for determining the condition of communication with a downstream communication device;
a timer for halting the communication for a predetermined period when the condition is deteriorated.

23. Communication device according to claim 18, further comprising a determination section for determining whether an error is recoverable when the error occurs in data received from an upstream communication device.

24. Communication device according to claim 23, wherein when the error is recoverable, the data reception state is not updated.

25. Communication device according to claim 23 or 24, wherein when the error is unrecoverable, the data reception state is updated as in normal data reception.

26. A communication device in a data communication system, comprising:
a receiver for receiving data and a first data reception state from an upstream communication device, wherein the first data reception state is a data reception state of the upstream communication device;
a detector for detecting a second data reception state of the communication device; and
a determination section for determining a data transmission state by comparing the first data reception state and the second data reception state.

27. Communication device according to claim 26, wherein each of the first and second data reception states indicates whether each piece of corresponding data has been normally received.

28. Communication device according to claim 26, wherein each of the first and second data reception states indicates an earliest one of pieces of corresponding data that have not been normally received.

29. Communication device according to claim 27 or 28, wherein each of the first and second data reception states in normal data transmission indicates a piece of corresponding data that should be arriving next.

30. Communication device according to claim 26, wherein the determination section comprises:
a comparator for comparing the first data reception state and the second data reception state for a piece of data that was not normally transmitted; and
a controller for identifying a link in which the piece of data was not normally transmitted, based on a comparison result.

31. Communication device according to claim 30, further comprising a timer which is set for a transmission wait time corresponding to the link for the piece of data that was not normally transmitted.

32. Communication device according to claim 31, further comprising:
a condition check section for determining the condition of communication with the upstream communication device; and
a timer controller for prolonging the transmission wait time by the predetermined period when the condition is deteriorated in a state of setting the timer for the transmission wait time.

33. A base station in a mobile communications system, comprising the communication device according to claim 18 or 26.

34. A user data processing device in a mobile communications system, comprising the communication device according to claim 26.

35. A mobile communications system comprising the base station according to claim 33 and the user data processing device according to claim 34.

36. A program instructing a computer to perform communication control in a communication device for transmitting data, comprising:
a receiver receiving data from upstream;
a detector detecting a data reception state from received data; and
a transmitter transmitting the data reception state to downstream.

37. A program instructing a computer to perform communication control in a communication device for transmitting data, comprising:
a receiver receiving data and a first data reception state from an upstream communication device, wherein the first data reception state is a data reception state of the upstream communication device;
a detector detecting a second data reception state of the communication device; and
a determination section determining a data transmission state by comparing the first data reception state and the second data reception state.

38. Program according to claim 37, wherein the determination section comprises:
a comparator comparing the first data reception state and the second data reception state for a piece of data that was not normally transmitted; and
a controller identifying a link in which the piece of data was not normally transmitted, based on a comparison result.

39. Program according to claim 38, further comprising a timer setting a transmission wait time corresponding to the link for the piece of data that was not normally transmitted.

40. Program according to claim 39, further comprising:
a condition check section determining the condition of communication with the upstream communication device; and
a timer controller prolonging the transmission wait time by the predetermined period when the condition is deteriorated in a state of setting the timer for the transmission wait time.
